# EUROPÄISCHE PATENTSCHRIFT

(11) **EP 3 044 567 B1**
(45) Veröffentlichungstag und Bekanntmachung des Hinweises auf die Patenterteilung: **10.04.2024**
(21) Anmeldenummer: 14765957.7
(22) Anmeldetag: 15.09.2014
(51) Int. Cl.: G01N 21/03, G01N 21/64, G02B 21/00, G02B 21/36

(54) **KÜVETTE FÜR EINE INVERSE FLUORESZENZ-UNTERSUCHUNG**
CUVETTE FOR AN INVERTED FLUORESCENCE ANALYSIS
CUVETTE D'ANALYSE EN FLUORESCENCE INVERSÉE

(30) Priorität: 13.09.2013 DE 102013110093
(43) Veröffentlichungstag der Anmeldung: 20.07.2016
(73) Patentinhaber: Johann Wolfgang Goethe-Universität, 60323 Frankfurt am Main (DE)
(72) Erfinder: PAMPALONI, Francesco, 65929 Frankfurt am Main (DE); STELZER, Ernst H. K., 74909 Meckesheim (DE)
(74) Vertreter: Lucke, Andreas
(86) Internationale Anmeldenummer: PCT/EP2014/069601
(87) Internationale Veröffentlichungsnummer: WO 2015/036589

(56) Entgegenhaltungen:
- EP-A1- 2 450 690
- EP-A1- 2 620 762
- EP-A2- 0 164 567
- WO-A1-2015/004107
- WO-A2-2012/122027
- US-A1- 2005 106 074
- US-A1- 2012 206 798

## Beschreibung

### GEBIET DER ERFINDUNG

Die vorliegende Erfindung liegt auf dem Gebiet der mikroskopischen Untersuchung von Fluoreszenzproben. Insbesondere betrifft sie eine Mikrotiterplatte zur Aufnahme und Positionierung einer oder mehrerer Fluoreszenzproben sowie eine Lichtscheiben-Fluoreszenz-Mikroskopie(LSFM)-Anordnung, ein System und ein Verfahren zur Untersuchung einer Fluoreszenzprobe.

### HINTERGRUND DER ERFINDUNG

Die Fluoreszenzmikroskopie wird in unterschiedlichen Bereichen zur Untersuchung von biologischen Proben eingesetzt. Ein Beispiel ist die fluoreszenzmikroskopische Untersuchung von Zell-Spheroiden, insbesondere von multizellulären Tumor-Spheroiden, bei denen es sich um kugelförmige Zellaggregate oder Zellanhäufungen handelt, die mehrere tausend Zellen umfassen können. Solche Proben können einen Durchmesser zwischen einigen 10 µm und einigen 100 µm aufweisen.

Für die Fluoreszenz-Untersuchung werden die Proben mit einem oder mehreren Fluoreszenzfarbstoffen präpariert, die mit einer bestimmten Wellenlänge angeregt werden können. Alternativ können auch Proben verwendet werden, die selbstproduzierte Fluoreszenzfarbstoffe aufweisen und daher nicht mit solchen präpariert werden müssen. In Antwort auf die Anregung emittieren die präparierten Probenbestandteile ein charakteristisches Fluoreszenzlicht-Spektrum, wobei sich die Wellenlänge der maximalen Fluoreszenzemission typischerweise von der Anregungswellenlänge unterscheidet.

Ein Beispiel für einen geeigneten Fluoreszenzfarbstoff ist der Farbstoff DRAQ5, der mit einer Wellenlänge von 633 nm angeregt werden kann und der in Antwort auf diese Anregung eine maximale Fluoreszenzemission im Bereich von 700 nm aufweist.

Um eine Probe dreidimensional zu untersuchen, können nacheinander verschiedene Probenebenen angeregt werden, die parallel zueinander liegen und sich in unterschiedlichen Tiefen der Probe befinden. Eine solche selektive Anregung eines in einer Ebene liegenden oder scheibenförmigen Probenbereichs kann dadurch erreicht werden, dass das Anregungslicht in Form einer Lichtebene oder Lichtscheibe in die Probe projiziert bzw. fokussiert wird. Eine Möglichkeit eine solche Lichtebene zu erzeugen, besteht darin, den Anregungsstrahl durch eine bestimmte Optik entsprechend zu formen. Eine andere Möglichkeit besteht darin, den Anregungslichtstrahl entlang einer Ebene zu scannen. Die verwendete Scannrate ist dabei üblicherweise mehrere Größenordnungen höher als die Detektions- oder Abtastrate, mit der ein Detektionsmittel, z.B eine CCD-Kamera, das von der angeregten Probenebene emittierte Fluoreszenzlicht detektiert. Dadurch erscheint die detektierte Probenebene als eine gleichmäßig beleuchtete Ebene, auch wenn der gescannte Anregungsstrahl an sich eine im Wesentlichen eindimensionale Ausdehnung hat.

Bei der zuvor beschriebenen Lichtscheiben-Fluoreszenz-Mikroskopie (LSFM) wird üblicherweise solches Fluoreszenzlicht detektiert, das von der Probe senkrecht zur Lichtebene ausgesandt wird, weil dadurch die zu detektierenden Probenbereiche, die in einer Ebene angeordnet sind, gleichermaßen intensiv detektiert werden. Ein weiterer Vorteil ist, dass das zu detektierende Fluoreszenzlicht mit vergleichsweise wenig Anregungslicht vermischt ist.

Um Proben mit Hilfe von Lichtscheiben-Fluoreszenz-Mikroskopie zu untersuchen, werden im Stand der Technik verschiedene Anordnungen verwendet. Zum Beispiel wird für die obengenannte Untersuchung die Probe auf oder unter einem Deckglas positioniert und schräg von oben beleuchtet. Mit einem geeigneten Detektionsobjektiv wird das von der Probe schräg nach oben und senkrecht zur Beleuchtungsrichtung emittierte Fluoreszenzlicht empfangen und an ein Detektionsmittel zur Detektion weitergeleitet.

Ein Nachteil einer solchen Untersuchung besteht darin, dass jede einzelne Probe zunächst "gefunden" werden muss, bevor sie genau untersucht werden kann. Deshalb ist ein solches Untersuchungsverfahren, insbesondere bei einer Vielzahl von Proben, sehr zeitaufwändig und ungeeignet, wenn die Untersuchung mit einem hohen Durchsatz erfolgen soll.

Nachteilig ist weiterhin, dass bei einer solchen Untersuchung die Abbildungsqualität oft nicht optimal ist. Beispielsweise kann sie beeinträchtigt werden, wenn die Probe auf dem Deckglas von einem Probenmedium umgeben ist, dessen Oberfläche, an der das Anregungslicht und das empfangene Fluoreszenzlicht gebrochen werden, unregelmäßig gewölbt ist, wodurch Abbildungsfehler entstehen können.

Auch wenn sich die Probe unter einem Deckglas befindet und die Beleuchtung und das Empfangen des Fluoreszenzlichtes senkrecht zueinander erfolgen, können aufgrund der Brechungsindexänderungen und der zugehörigen Lichtbrechung an der schräg zur Beleuchtungsrichtung und zur Richtung des empfangenen Fluoreszenzlichtes verlaufenden Oberseite und Unterseite des Deckglases Abbildungsfehler auftreten.

Der vorliegenden Erfindung liegt die Aufgabe zugrunde, Vorrichtungen und ein Verfahren zur mikroskopischen Untersuchung einer Fluoreszenzprobe zur Verfügung zu stellen, welche die obengenannten Nachteile überwinden und eine vorteilhafte Probenuntersuchung gestatten.

Aus der EP 2 450 690 A1 ist eine Küvette mit planaren und im Winkel zueinander stehenden Bodenflächen bekannt, welche in Fluoreszenzanwendungen auf einem rotierenden Probenteller verwendet werden kann, um eine Menge an PCR-Produkten in der Küvette während einer thermischen Polymerase-Kettenreaktion zu quantifizieren.

Aus der US 2005/0106074 A1 ist eine Mikrotiterplatte mit eingekerbter Rückseite bekannt, wobei die Kerben eine Verformung der Mikrotiterplatte aufgrund einer Laser-induzierten Schrumpfung des Mikrotiterplattenmaterials ausgleichen und verringern.

Aus der US 2012/0206798 A1 ist ein Mikroskop für Lichtblatt-Fluoreszenzmikroskopie bekannt, wobei ein Detektionsobjektiv und ein Beleuchtungsobjektiv gemeinsam von oben in eine Petrischale eingeführt werden, während eine Probe in der Petrischale über konventionelle inverse Mikroskopie positioniert werden kann.

Die WO 2015/004107 A1 wurde als Stand der Technik gemäß Art. 54(3) EPÜ zitiert. Sie offenbart eine Anordnung zur Lichtblattmikroskopie. Die Anordnung umfasst eine Beleuchtungsoptik mit einem Beleuchtungsobjektiv zur Beleuchtung der Probe mit einem Lichtblatt, wobei die optische Achse des Beleuchtungsobjektivs und das Lichtblatt in einer Ebene liegen, die mit der Normalen der Bezugsfläche einen von Null verschiedenen Beleuchtungswinkel einschließt. Die Anordnung umfasst ferner eine Detektionsoptik mit einem Detektionsobjektiv, dessen optische Achse mit der Normalen der Bezugsfläche einen von Null verschiedenen Detektionswinkel einschließt. Ein Probengefäß kann hinsichtlich einer ebenen Bezugsfläche ausgerichtet werden, welche durch die horizontale Oberfläche eines Probentisches definiert wird. Ein Probengefäß kann eine Mehrzahl von rinnenförmigen

Senken aufweisen, welche durch Streben in einzelne Vertiefungen unterteilt werden können, und die es möglich machen, mehrere Proben nebeneinander in einer Senke anzuordnen.

EP2620762 A1 offenbart ein invertiertes konfokales Mikroskop, das einen Laser verwendet, um Licht in jede von mehreren Vertiefungen zu scannen, die in einer Anordnung auf einer Mikroplatte angeordnet sind. Das emittierte Fluoreszenzlicht wird entlang des gleichen vertikalen optischen Pfads unterhalb der Mikroplatte empfangen.

### ZUSAMMENFASSUNG DER ERFINDUNG

Diese Aufgabe wird durch die unabhängigen Ansprüche 1, 6 und 13 gelöst. Vorteilhafte Weiterbildungen und Ausführungsformen sind in den abhängigen Ansprüchen angegeben.

Die vorliegende Erfindung betrifft eine einstückig gebildete Mikrotiterplatte mit mehreren Küvetten zur Aufnahme einer Probe und zur Positionierung der Probe für eine Untersuchung mittels inverser Fluoreszenzmikroskopie, insbesondere inverser Lichtscheiben-Fluoreszenz-Mikroskopie. Die mehreren Küvetten umfassen eine Öffnung, die an einem oberen Ende der Küvette angeordnet ist sowie eine erste und eine zweite transparente Bodenwand, die derart zueinander angeordnet sind, dass ihre Flächennormalen mit einem Winkel zwischen 70° und 110°, vorzugsweise zwischen 80° und 100°, besonders vorzugsweise zwischen 85° und 90° und insbesondere von zumindest annähernd 90° zueinander geneigt sind.

Eine Küvette der mehreren Küvetten ist jeweils geeignet, eine mit einem Fluoreszenzfarbstoff markierte Probe der eingangs genannten Art allein oder zusammen mit einem Probenmedium, beispielsweise zusammen mit einer wässrigen Lösung, in der sich eine oder mehrere Proben befinden, durch ihre Öffnung aufzunehmen.

Sowohl bei der Aufnahme der Probe als auch bei der Untersuchung und Positionierung der Probe ist die Küvette so ausgerichtet, dass ihre Öffnung vertikal nach oben weist. Daher gelangt die Probe aufgrund der Schwerkraft an einen Probenort, der sich am Boden der Küvette befindet und der direkt an die zueinander geneigten Bodenwände angrenzt. Dies kann beispielsweise durch ein Absinken im Probenmedium erfolgen oder dadurch, dass die Probe am Boden der Küvette abgelegt wird oder auf diesen fällt, wobei die Probe durch die geneigten Bodenwände und die Schwerkraft zum Probenort geführt oder an den Probenort geleitet wird. Der Probenort entspricht demjenigen Volumen, in das die Probe in der ausgerichteten Küvette ohne aktives Zutun von außen mithilfe der geneigten Bodenwände gelangt oder geführt wird. Die Küvette bietet damit den Vorteil, eine Probe für eine Untersuchung ohne aktives Zutun und beschädigungsfrei an einen Probenort in der Küvette führen zu können und die Probenposition auf den Probenort beschränken zu können. Weil der Probenort bekannt und räumlich eng eingegrenzt ist, ist die Probe schnell auffindbar, wodurch der Zeitaufwand für eine optische Untersuchung der Probe reduziert werden kann.

Weil die erste und zweite Bodenwand transparent sind, kann die Probe am Probenort durch die erste oder die zweite Bodenwand entlang einer Beleuchtungsrichtung mit Anregungslicht beleuchtet oder angeregt werden, und kann Fluoreszenzlicht, das vom Probenort senkrecht zur Beleuchtungsrichtung ausgesandt wird, die Küvette durch die zweite bzw. die erste Bodenwand entlang einer Detektionsrichtung verlassen.

Im Idealfall beträgt der Winkel zwischen der ersten und zweiten Bodenwand 90°. Dies gestattet es, die Beleuchtungsrichtung und die Detektionsrichtung so zu wählen, dass die Beleuchtungsrichtung mit der Richtung der Flächennormalen der ersten oder zweiten Bodenwand übereinstimmt und die Detektionsrichtung mit der Richtung der Flächennormalen der zweiten bzw. ersten Bodenwand übereinstimmt. Weil bei der Untersuchung sowohl das Anregungslicht als auch das zu detektierende Fluoreszenzlicht senkrecht durch die jeweilige Bodenwand treten können, ist es möglich, Abbildungsfehler oder optische Verzerrungen, wie beispielsweise eine sphärische Aberration, Astigmatismus oder Koma, die sich bei einer Abweichung des Einfalls- oder Ausfallswinkels von 90° ergeben und die umso größer sind, je größer die Abweichung ist, zu vermeiden oder zu reduzieren. Mit der Küvette ist daher eine Untersuchung möglich, bei der zwischen der Probe und den Objektiven sämtliche Grenzflächen, an denen sich für das Anregungslicht und/oder für das zu detektierende Fluoreszenzlicht ein Brechungsindexübergang ergibt, senkrecht zum Lichtweg stehen. Dadurch kann die Lichtscheibe verzerrungsfrei oder nahezu verzerrungsfrei in die Probe fokussiert werden und die angeregte Probenebene verzerrungsfrei oder nahezu verzerrungsfrei abgebildet werden. Man beachte, dass die jeweilige Küvette nicht auf den obengenannten Idealfall beschränkt ist, sondern dass die Neigung der Bodenwände auch innerhalb des genannten Bereiches liegen kann, mit dem ebenfalls eine vorteilhafte Untersuchung mit geringer Verzerrung möglich ist.

Ein weiterer Vorteil der Küvette besteht darin, dass sie sich für die Untersuchung mit einer inversen Mikroskop-Anordnung eignet. Bei einer inversen Mikroskop-Anordnung sind die Objektive zur Untersuchung der Probe unterhalb der Probe angeordnet. Aufgrund der transparenten Bodenwände können sowohl das beleuchtende Beleuchtungsobjektiv als auch das Fluoreszenzlicht empfangende Detektionsobjektiv unterhalb der Küvette angeordnet werden. Weil oberhalb der Küvette keine Objektive benötigt werden, kann die Küvette von oben frei zugänglich sein, was viele Vorteile bei der Handhabung mit der Probe und der Untersuchung bietet. Beispielsweise kann die Küvette ohne großen Zeitaufwand ausgetauscht werden, ohne dass dabei die Objektiveinstellung verändert werden muss, die Probe kann während der Untersuchung grob von oben inspiziert werden oder es kann Probenmedium hinzugegeben oder entnommen werden.

Bei der Küvette sind die Bodenwände für das Anregungslicht und das zu detektierende Fluoreszenzlicht transparent. Vorzugsweise sind die Bodenwände derart transparent, dass die Transmission in zwei Wellenlängenbereichen, die jeweils eine Breite von mindestens 20 nm aufweisen und die sich jeweils zwischen 300 nm und 1200 nm, insbesondere zwischen 400 nm und 800 nm befinden, mindestens 50 %, vorzugsweise mindestens 70 % und besonders vorzugsweise mindestens 90 % beträgt. Die Wellenlänge von Anregungs- und Fluoreszenzlicht bei rein fluoreszenzmikroskopischen Anwendungen liegt üblicherweise im Bereich zwischen 400 nm und 800 nm. Eine Transmission für den größeren Bereich zwischen 300 nm und 1200 nm gestattet die zusätzliche Verwendung der Küvette für weitere Anwendungen unter Verwendung weiterer Wellenlängen, beispielsweise für ein Schneiden mittels UV-Licht (sog. "UV cutter") oder eine Ausnutzung des Effektes der optischen Pinzette.

In einer bevorzugten Ausführungsform ist die jeweilige Küvette zumindest teilweise aus einem Polymer, insbesondere aus Polyfluorethylen, Polytetrafluorethylen, Tetrafluorethylen, einem Cyclo-Olefin-Polymer, Perfluorpropylen, einem Polyamid oder einem Polyimid gebildet. Aus diesen Materialen kann die Küvette auf vergleichsweise einfache Art und Weise und kostengünstig mit Hilfe eines thermischen Formungsprozesses hergestellt werden.

In einer anderen Ausführungsform besteht die jeweilige Küvette zumindest teilweise aus Glas.

Der Brechungsindex der Bodenwände weist vorzugsweise einen Wert zwischen 1,2 und 1,7 auf. Um Brechungsindex-Unterschiede im Strahlengang in Beleuchtungsrichtung und in Detektionsrichtung zu reduzieren und die Qualität der optischen Abbildung zu verbessern, kann die jeweilige Küvette auch zusammen mit geeigneten Immersionsmedien verwendet werden, die beispielsweise in die Küvette eingebracht werden und/oder die außen an die Küvette angrenzend vorgesehen sind.

In einer vorteilhaften Ausführungsform liegt die Wandstärke der Bodenwände zwischen 12,5 µm und 160 µm. Dadurch kann die Qualität der optischen Untersuchung weiter verbessert werden, insbesondere wenn das Licht nicht senkrecht auf die Bodenwände einfällt.

In einer bevorzugten Ausführungsform der Mikrotiterplatte weisen die Flächennormalen der ersten und zweiten Bodenwand der jeweiligen Küvette zu einer Längsachse der Küvette einen Winkel zwischen 40° und 50°, vorzugsweise von zumindest annähernd 45° auf. Dadurch kann bei einer vertikalen Ausrichtung der Längsachse und bei nach oben weisender Öffnung die Probe unter einem Winkel von zumindest annähernd 45° schräg von unten beleuchtet werden, und das Fluorenzenzlicht ebenfalls unter einem Winkel von zumindest annähernd 45° schräg von unten empfangen werden, wobei die Beleuchtungs- und die Detektionsrichtung um zumindest annähernd 90° zueinander geneigt sind. Dies erlaubt die Verwendung einer symmetrischen Untersuchungsanordnung.

In einer bevorzugten Ausführungsform, ist der Winkel (α) zwischen der Flächennormalen der zweiten Bodenwand der Küvetten und der Längsachse der jeweilige Küvette kleiner als der Winkel (β) zwischen der Flächennormalen der ersten Bodenwand der Küvetten und der Längsachse der jeweilige Küvette.

In einer anderen Ausführungsform ist der Winkel zwischen der Flächennormalen und der zweiten Bodenwand und einer Längsachse der Küvette kleiner als 40°, insbesondere liegt er zwischen 35° und 10°. In dieser Ausführungsform wird die Probe vorzugsweise durch die erste Bodenwand beleuchtet und wird das durch die zweite Bodenwand ausgesandte Fluoreszenzlicht detektiert. Bei einer vertikalen Ausrichtung der Längsachse ist die zweite Bodenwand somit flacher und die erste Bodenwand steiler ausgerichtet. Dementsprechend ist das Detektionsobjektiv bei seiner bevorzugten Ausrichtung in Richtung der Flächennormalen der zweiten Bodenwand vergleichsweise steil und weniger zur vertikalen Richtung geneigt ausgerichtet. Man beachte, dass die Angabe, dass ein Objektiv "in Richtung der Flächennormalen ausgerichtet ist" bedeuten soll, dass die optische Achse des Objektivs und die Flächennormale zumindest annähernd parallel sind. Bei der Verwendung mehrerer Küvetten, die nebeneinander angeordnet sind, hat dies den Vorteil, dass das Detektionsobjektiv näher an die zweite Bodenwand herangebracht werden kann, ohne dabei an die benachbarten Küvetten anzustoßen. Dadurch kann bei mehreren nebeneinander angeordneten Küvetten ein Detektionsobjektiv mit einem kleineren Arbeitsabstand und einer höheren Vergrößerung verwendet werden.

In einer weiteren vorteilhaften Ausführungsform weist die Küvette weiterhin eine dritte und eine vierte transparente Bodenwand auf, die derart zueinander angeordnet sind, dass ihre Flächennormalen mit einem Winkel zwischen 70° und 110°, vorzugsweise zwischen 80° und 100°, besonders vorzugsweise zwischen 85° und 95° und insbesondere von zumindest annähernd 90° zueinander geneigt sind. Dadurch kann die Probe aus vier unterschiedlichen Richtungen, die den jeweiligen Richtungen der Flächennormalen entsprechen, auf die zuvor beschriebene vorteilhafte Art untersucht werden. Weiterhin kann der Probenort, an den die Probe durch die Bodenwände geführt wird und auf den die Position der Probe beschränkt ist, weiter verkleinert werden. Dadurch kann die zu untersuchende Probe mit noch weniger Zeitaufwand mit Hilfe von Objektiven aufgefunden werden.

Die Bodenwände können derart angeordnet sein, dass jedes Flächennormalen-Paar der vier genannten Flächennormalen einen Winkel zwischen 70° und 110°, vorzugsweise zwischen 80° und 100°, besonders vorzugsweise zwischen 85° und 95° und insbesondere von zumindest annähernd 90° einschließt. Die vier transparenten Bodenwände können eine umgedrehte Pyramide bilden und die Probe kann aus vier unterschiedlichen Richtungen mit unterschiedlichen Ansichten, die insbesondere um zumindest annähernd 90° zueinander gedreht sind, mit hoher Qualität und schnell untersucht werden.

In einer Ausführungsform ist der Querschnitt der Küvette rechteckig, insbesondere quadratisch.

In anderen Ausführungsformen hat die Küvette einen elliptischen, insbesondere einen kreisförmigen Querschnitt. Bei einem kreisförmigen Querschnitt kann die Küvette beispielsweise um eine Längsachse drehbar in einer kreisförmigen Aufnahmeöffnung angeordnet werden.

Das innere Volumen oder Fassungsvermögen der Küvette kann zwischen 0,01 ml und 0,5 ml, besonders vorzugsweise zwischen 0,05 ml und 0,2 ml, insbesondere zwischen 0,09 ml und 0,13 ml betragen.

Der maximale Innendurchmesser der Küvette kann zwischen 3 mm und 9 mm, vorzugsweise zwischen 4 mm und 8 mm aufweisen.

Die Höhe der jeweiligen Küvette kann zwischen 3 mm und 30 mm, vorzugsweise zwischen 3 mm und 20 mm und besonders vorzugsweise zwischen 3 mm und 10 mm betragen.

In einem illustrativen Beispiel, welches nicht Teil der beanspruchten Erfindung ist, können, um mehrere Küvetten zu einer Küvetten-Reihe und/oder zu einem Küvetten-Array zu verbinden, an einer Küvette Verbindungsmittel vorgesehen sein. Die Verbindung kann beispielsweise durch eine Steckverbindung (sog. "Pin and Socket"-Verbindung) oder durch eine magnetische Verbindung gebildet werden.

In einem weiteren illustrativen Beispiel, welches nicht Teil der beanspruchten Erfindung ist, können einzelne Küvetten und/oder eine Gruppe von verbundenen Küvetten von der Küvetten-Reihe und/oder dem Küvetten-Array getrennt werden. Dies ist zum Beispiel vorteilhaft, wenn einige bereits untersuchte Proben entfernt werden sollen, z.B. für weitere Untersuchungen, und andere Proben noch zu untersuchen sind, oder wenn bestimmte Proben ausgetauscht werden sollen. Außerdem können mehrere oder eine Vielzahl von Proben mit einer hohen Durchsatzgeschwindigkeit und mit einer hohen Qualität untersucht werden.

Die vorliegende Erfindung betrifft eine Mikrotiterplatte zur Aufnahme und Positionierung von Proben für eine Untersuchung mittels inverser Fluoreszenzmikroskopie, insbesondere inverser Lichtscheiben-Fluoreszenz-Mikroskopie, die mehrere Küvetten nach einer der zuvor genannten Ausführungsformen umfasst und die einstückig ausgebildet ist. Wenn eine Mikrotiterplatte eine Vielzahl von Küvetten in einem definierten und bekannten Abstand enthält, kann eine Vorrichtung zur Untersuchung der Probe schnell auf einen bestimmten Probenort eingestellt werden. Dabei können die zu untersuchenden Proben schnell gefunden werden und zwar ohne, dass nach der Probe selbst gesucht zu werden braucht, sondern allein aus Kenntnis der Geometrie der Mikrotiterplatte und unter Ausnutzung der Tatsache, dass die Küvetten der Mikrotiterplatte geeignet sind, die Probe am vorbestimmten Probenort innerhalb der Küvette zu "sammeln". Dadurch können eine Vielzahl von Proben mit einer hohen Durchsatzgeschwindigkeit und mit einer hohen Qualität untersucht werden.

Vorzugsweise ist die Mikrotiterplatte einstückig aus einem Polymer, insbesondere aus einer Polymerfolie durch thermische Formung gebildet, wobei das Polymer eines der zuvor genannten Polymere sein kann. Eine solche Mikrotiterplatte kann kostengünstig und mit der benötigten optischen Qualität der Bodenwände gefertigt werden.

In einer anderen Ausführungsform, welche nicht Teil der beanspruchten Erfindung ist, ist die Mikrotiterplatte nicht einstückig gebildet, sondern umfasst einen Rahmen zur Aufnahme mehrerer Küvetten gemäß einer oder mehrerer der zuvor genannten Ausführungsformen, wobei die Küvetten zusätzlich Halterungsmittel umfassen, über welche sie in dem Rahmen aufgenommen werden können. In dieser Ausführungsform können die Küvetten beispielsweise einzeln und/oder in Gruppen aus dem Rahmen entnehmbar sein und/oder um ihre jeweilige Längsachse in dem Rahmen drehbar aufgenommen sein. Dadurch wird einerseits die Untersuchbarkeit verbessert, weil beispielsweise durch manuelles Drehen einer Küvette die Probenansicht geändert werden kann, und andererseits wird die Handhabung bei der Untersuchung verbessert, weil beispielsweise zum Entfernen oder Tauschen einzelner Küvetten nicht die gesamte Mikrotiterplatte entfernt oder getauscht werden muss.

In einer weiteren Ausführungsform umfasst die Mikrotiterplatte ein Array mit mehreren Küvetten nach einer der zuvor genannten Ausführungsformen und einen Rahmen zur Aufnahme des Arrays. Das Küvetten-Array ist dabei einstückig gebildet, vorzugsweise aus einer dünnen Polymerfolie mittels thermischer Formung. Mithilfe des Rahmens kann das Küvetten-Array stabilisiert und/oder in einer Untersuchungsvorrichtung aufgenommen und positioniert werden. Der Rahmen kann beispielsweise eine Platte mit mehreren Durchgangslöchern umfassen, durch die die Küvetten des Küvetten-Arrays geführt werden können und in denen sie aufgenommen werden können.

In den Mikrotiterplatten gemäß der zuvor genannten Ausführungsformen können die mehreren Küvetten in einem Array angeordnet sein, insbesondere in einem (6 x 8)-, (8 x 12)-, (16 x 24)- oder einem (32 x 48)-Array.

Die vorliegende Erfindung umfasst weiterhin eine Lichtscheiben-Fluoreszenz-Mikroskopie(LSFM)-Anordnung zur Untersuchung einer Probe, insbesondere zur Untersuchung einer Vielzahl von Proben mit einem hohen Durchsatz. Die LSFM-Anordnung umfasst eine Beleuchtungsquelle zur Erzeugung von Anregungslicht, ein Beleuchtungsobjektiv, ein Detektionsobjektiv sowie Positioniermittel. Das Beleuchtungsobjektiv dient zum Empfangen des Anregungslichts und zum Fokussieren des Anregungslichts in Form einer Lichtebene auf einen Probenort, wobei das Beleuchtungsobjektiv schräg nach oben gerichtet ist. Das Detektionsobjektiv dient zum Empfangen von Fluoreszenzlicht, welches von einer am Probenort positionierten Probe ausgesandt wird, wobei das Detektionsobjektiv schräg nach oben gerichtet ist und in einem Winkel zwischen 70° und 110°, vorzugsweise zwischen 80° und 100°, besonders vorzugsweise zwischen 85° und 95°, insbesondere von zumindest annähernd 90° zum Beleuchtungsobjektiv angeordnet ist. Mit Hilfe des Positioniermittels kann eine Mikrotiterplatte nach einer der zuvor genannten Ausführungsformen in Bezug auf das Beleuchtungsobjektiv und das Detektionsobjektiv positioniert werden. Dazu kann die Mikrotiterplatte und/oder das Beleuchtungs- und das Detektionsobjektiv verschoben werden. Die genannte Anordnung der Objektive zueinander entspricht der Ausrichtung der Beleuchtungsrichtung und der Detektionsrichtung zueinander. Auch hier bezeichnet der "Winkel" zwischen den Objektiven den Winkel zwischen den entsprechenden optischen Achsen.

In einer vorteilhaften Ausführungsform der LSFM-Anordnung sind das Beleuchtungsobjektiv und das Detektionsobjektiv derart in einem Aufnahmemittel aufgenommen, dass die Objektive gemeinsam um eine vertikale Achse drehbar und/oder gemeinsam gegenüber der vertikalen Achse kippbar sind. Eine solche Positioniermöglichkeit kann besonders vorteilhaft mit der Küvette gemäß der Ausführungsform mit vier Bodenwänden eingesetzt werden, da über eine Drehung um die vertikale Achse die Objektive leicht für Probenuntersuchungen aus unterschiedlichen Perspektiven eingestellt werden können.

Die LSFM-Anordnung kann weiterhin ein Detektionsmittel zum Detektieren von Fluoreszenzlicht, ein erstes Reflektionsmittel zum Ablenken des Anregungslichts zu dem Beleuchtungsobjektiv und ein zweites Reflektionsmittel zum Ablenken des vom Detektionsobjektiv empfangenen Fluoreszenzlichts zu dem Detektionsmittel umfassen. Dabei ist das erste Reflektionsmittel derart ausrichtbar, dass bei einem Kippen und/oder Drehen des Beleuchtungsobjektivs das Anregungslicht derart durch das erste Reflektionsmittel zu dem Beleuchtungsobjektiv abgelenkt werden kann, dass es weiterhin zumindest näherungsweise in Richtung der optischen Achse in das Beleuchtungsobjektiv eintritt. Das zweite Reflektionsmittel ist derart ausrichtbar, dass bei einem Kippen und/oder Drehen des Detektionsobjektivs das Fluoreszenzlicht vom gekippten und/oder gedrehten Detektionsobjektiv durch das zweite Reflektionsmittel weiterhin zumindest näherungsweise zu dem Detektionsmittel abgelenkt werden kann. Mit anderen Worten kann mit Hilfe des ersten und zweiten Reflektionsmittels sichergestellt werden, dass die Probe bei einem Drehen und/oder Kippen weiterhin korrekt beleuchtet werden kann und das emittierte Fluoreszenzlicht weiterhin korrekt detektiert werden kann.

In einer Weiterbildung der LSFM-Anordnung ist das Beleuchtungsobjektiv auch zum Empfangen von Fluoreszenzlicht vom Probenort geeignet und das Detektionsobjektiv ist auch zum Empfangen und Fokussieren des Anregungslichts geeignet. Auch diese Ausführungsform umfasst ein Detektionsmittel zum Detektieren von Fluoreszenzlicht und weiterhin ein drittes Reflektionsmittel zum Ablenken des Anregungslichts zu dem Beleuchtungsobjektiv oder zu dem Detektionsobjektiv, und ein viertes Reflektionsmittel zum Ablenken des vom Detektionsobjektiv oder vom Beleuchtungsobjektiv empfangenen Fluoreszenzlichts zu dem Detektionsmittel. Das dritte und das vierte Reflektionsmittel sind jeweils in eine erste und in eine zweite Stellung verstellbar, wobei in der ersten Stellung das dritte Reflektionsmittel zum Ablenken des Anregungslichts zu dem Beleuchtungsobjektiv und das vierte Reflektionsmittel zum Ablenken des vom Detektionsobjektiv empfangenen Fluoreszenzlichts zu dem Detektionsmittel eingestellt sind. In der zweiten Stellung sind das dritte und vierte Reflektionsmittel genau umgekehrt eingestellt, nämlich das dritte Reflektionsmittel zum Ablenken des Anregungslichts zu dem Detektionsobjektiv und das vierte Reflektionsmittel zum Ablenken des vom Beleuchtungsobjektiv empfangenen Fluoreszenzlichts zu dem Detektionsmittel. Mit Hilfe des dritten und vierten Reflektionsmittels kann damit der Zeitaufwand für die Untersuchung weiter verringert werden, weil die Beleuchtungsrichtung und die Detektionsrichtung schnell vertauscht werden können, ohne dass dafür die Ausrichtung der Objektive zur Küvette geändert werden muss.

In den zuvor genannten Ausführungsformen kann das erste Reflektionsmittel auch mit dem dritten Reflektionsmittel identisch sein und das zweite Reflektionsmittel kann mit dem vierten Reflektionsmittel identisch sein, sodass die jeweiligen zuvor beschriebenen Operationen über zwei verschiedene und nicht notwendigerweise über vier verschiedene Reflektionsmittel vorgenommen werden können. Dabei kann das erste und das zweite Reflektionsmittel für mindestens eine, vorzugsweise jedoch für jede Kipp- und/oder Drehposition der Objektive die genannte erste und die genannte zweite Stellung aufweisen, sodass vorzugsweise in jeder Kipp- und/oder Drehposition die Beleuchtungsrichtung und die Detektionsrichtung mit Hilfe der Reflektionsmittel vertauscht werden können.

Weiterhin umfasst die vorliegende Erfindung ein System zur Untersuchung einer Probe, das eine Mikrotiterplatte nach einer der zuvor genannten Ausführungsformen und eine LSFM-Anordnung nach einer der zuvor genannten Ausführungsformen umfasst. Zusätzlich zu einer erfindungsgemäßen Mikrotiterplatte oder alternativ dazu kann das System auch eine Mikrotiterplatte mit Küvetten umfassen, die jeweils einen horizontalen transparenten Boden aufweisen. Bei einer solchen Mikrotiterplatte wird die Probe nicht durch zwei separate und unter einem Winkel zueinander angeordnete Bodenwände untersucht, sondern durch nur einen transparenten Boden einer Küvette, der bei einer gebrauchsmäßigen Ausrichtung der Küvette horizontal verläuft. Da vorzugsweise solches Fluoreszenzlicht von der Probe detektiert wird, das von der Probe senkrecht zur angeregten Lichtebene emittiert wird, sind die Detektionsrichtung und die Anregungsrichtung bei einer Verwendung einer Mikrotiterplatte mit Küvetten, die einen horizontalen transparenten Boden aufweisen, nicht senkrecht zum transparenten horizontalen Boden.

Vorzugsweise umfasst das System eine erfindungsgemäße Mikrotiterplatte, ist das Beleuchtungsobjektiv senkrecht auf eine Bodenwand sowie auf den Probenort gerichtet und ist das Detektionsobjektiv senkrecht auf eine andere Bodenwand und ebenfalls auf den Probenort gerichtet.

In einer Ausführungsform befinden sich die durch das Beleuchtungsobjektiv definierte Beleuchtungsrichtung, die durch das Detektionsobjektiv definierte Detektionsrichtung und die Längsachse mindestens einer Küvette in einer gemeinsamen vertikalen Ebene. Bei einer solchen Anordnung können die Objektive, das Detektionsmittel und das Beleuchtungsmittel beispielsweise entlang einer Schiene montiert und angeordnet werden.

Schließlich umfasst die vorliegende Erfindung auch ein Verfahren zur Untersuchung einer Probe, vorzugsweise einer Vielzahl von Proben mit einem hohen Durchsatz, mit einem System nach einer zuvor genannten Ausführungsformen. Das Verfahren umfasst ein Fokussieren von Anregungslicht in Form einer Lichtebene an einem Probenort innerhalb einer der mehreren Küvetten, wobei das Fokussieren zumindest annähernd senkrecht durch eine Bodenwand erfolgt. Weiterhin umfasst das Verfahren ein Detektieren von Fluoreszenzlicht, das von einer Probe am Probenort zumindest annähernd senkrecht zur Lichtebene und zumindest annähernd senkrecht durch eine andere Probenwand ausgesandt wird.

In einem Verfahren gemäß einer anderen erfindungsgemäßen Ausführungsform wird eine Mikrotiterplatte mit Küvetten verwendet, die einen horizontalen transparenten Boden aufweisen. Dieses Verfahren umfasst ein Fokussieren von Anregungslicht in Form einer Lichtebene an einem Probenort innerhalb einer Küvette durch einen der genannten horizontalen transparenten Böden in einem Winkel zwischen 40° und 50°, vorzugsweise von zumindest annähernd 45° zur Flächennormalen des horizontalen transparenten Bodens und ein Detektieren von Fluoreszenzlicht, das von einer Probe am Probenort zumindest annähernd senkrecht zur Lichtebene und in einem Winkel zwischen 40° und 50°, vorzugsweise von zumindest annähernd 45° zur Flächennormalen des horizontalen transparenten Bodens ausgesandt wird.

In einer bevorzugten Ausführungsform umfasst das Verfahren weiterhin ein Abtasten einer Probe am Probenort, wobei die Probe zumindest annähernd senkrecht zur Lichtebene verschoben wird. Dies hat den Vorteil, dass die fokussierte Lichtebene während des Abtastens der Probe zur Probe zentriert bleibt, oder genauer gesagt, zur einer gedachten Achse zentriert bleibt, die durch die Mitte der Probe und in Abtastrichtung verläuft. Dadurch wird bei jeder Abtastposition jeweils nur eine schmale Probenebene zur Fluoreszenz angeregt, wodurch die Abbildung nicht durch Fluoreszenzlicht von benachbarten Bereichen der angeregten Probenebene beeinträchtigt wird und die Untersuchungsqualität beim Abtasten insgesamt verbessert werden kann.

### KURZBESCHREIBUNG DER FIGUREN

Weitere Vorteile und Merkmale der vorliegenden Erfindung ergeben sich aus der nachfolgenden Beschreibung, in der bevorzugte Ausführungsformen der Erfindung beispielhaft anhand von Zeichnungen näher erläutert werden, in denen
- Figuren 1 a) und b): zwei verschiedene Ansichten einer Küvette mit zwei Bodenwänden zeigen,
- Figuren 2 a) und b): zwei verschiedene Ansichten einer Küvette zeigen, die vier Bodenwände umfasst,
- Figur 3: eine Schnittansicht und Unteransicht einer Küvette zeigt, die ähnlich zu Küvette aus Figur 1 ist,
- Figur 4: eine Schnittansicht und Unteransicht einer Küvette zeigt, die ähnlich zu der Küvette aus Figur 2 ist,
- Figuren 5 a) und b): zwei verschiedene Ansichten einer Küvette zeigen, die einen quadratischen Querschnitt aufweist und die ein Verbindungsmittel und/oder ein Halterungsmittel umfasst,
- Figur 6: einen Teil eines erfindungsgemäßen Systems gemäß einer Ausführungsform mit einer Mikrotiterplatte zeigt, wobei die Mikrotiterplatte eine Vielzahl der Küvetten gemäß Figur 1 umfasst,
- Figuren 7 a) bis d): unterschiedliche perspektivische Ansichten des Systems aus Figur 6 aus zeigen,
- Figuren 8 a) bis d): schematische Darstellungen eines Teils eines erfindungsgemäßen Systems gemäß einer anderen Ausführungsform zeigen, wobei das System Küvetten gemäß einer anderen Ausführungsform umfasst,
- Figur 9: eine schematische Darstellung einer erfindungsgemäßen Lichtscheiben-Fluoreszenz-Mikroskopie (LFSM)-Anordnung gemäß einer Ausführungsform zeigt, und
- Figur 10: eine erfindungsgemäße LFSM-Anordnung gemäß einer anderen Ausführungsform zeigt.

In den angefügten Zeichnungen werden für gleiche Elemente gleiche Bezugszeichen verwendet.

### AUSFÜHRLICHE BESCHREIBUNG BEVORZUGTER AUSFÜHRUNGSFORMEN

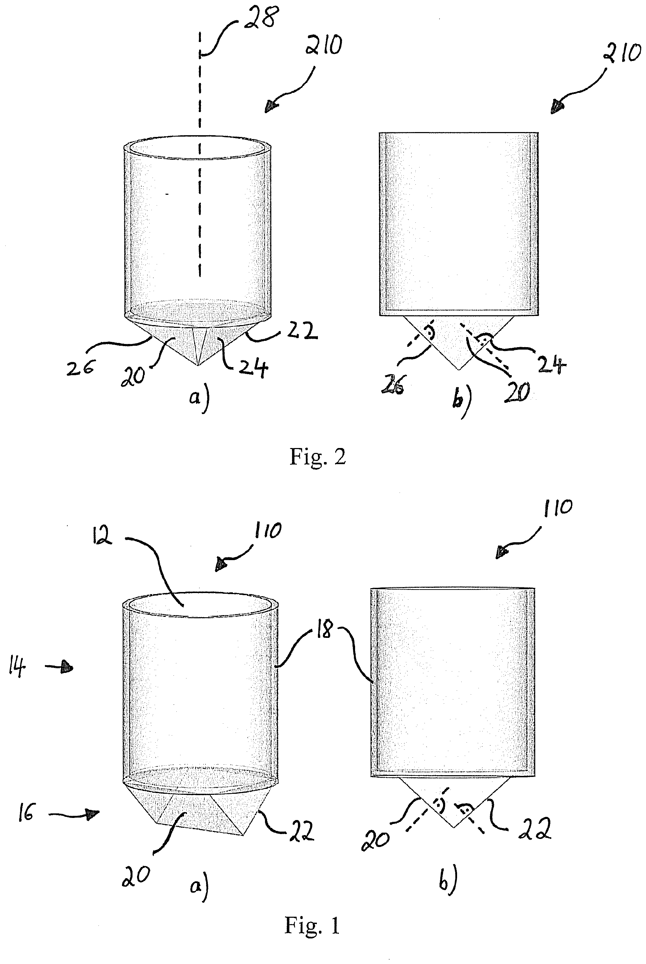

Figur 1 zeigt eine Küvette 110 gemäß einem Beispiel, wobei Figur 1 a) eine Perspektivansicht und Figur 1 b) eine Seitenansicht der Küvette 110 zeigt. Die Küvette 110 umfasst eine Öffnung 12 an einem oberen Ende sowie einen oberen Abschnitt 14 und einen unteren Abschnitt 16. Der obere Abschnitt 14 umfasst eine Seitenwand 18. Der untere Abschnitt 16 umfasst eine erste transparente Bodenwand 20 und eine zweite transparente Bodenwand 22. Bei der Küvette 110 aus Figur 1 sind die erste und die zweite Bodenwand 20 und 22 derart angeordnet, dass ihre Flächennormalen mit einem Winkel von 90° zueinander geneigt sind. Die Flächennormalen der ersten und zweiten Bodenwand 20 und 22 sind in Figur 1 b) jeweils durch eine gestrichelte Linie dargestellt.
Figur 2 zeigt ähnliche Ansichten wie Figur 1, jedoch von einer Küvette 210 gemäß einem anderen Beispiel. Im Unterschied zur Küvette 110 aus Figur 1 weist die Küvette 210 aus Figur 2 weiterhin eine dritte Bodenwand 24 und eine vierte Bodenwand 26 auf. Bei der Küvette 210 gemäß dieser Ausführungsform ist jedes Paar von Flächennormalen der vier Flächennormalen der vier Bodenwände 20 bis 26 mit einem Winkel von 90° zueinander geneigt. Die Flächennormalen der dritten und vierten Bodenwand sind in Figur 2 b) jeweils durch eine gestrichelte Linie dargestellt.

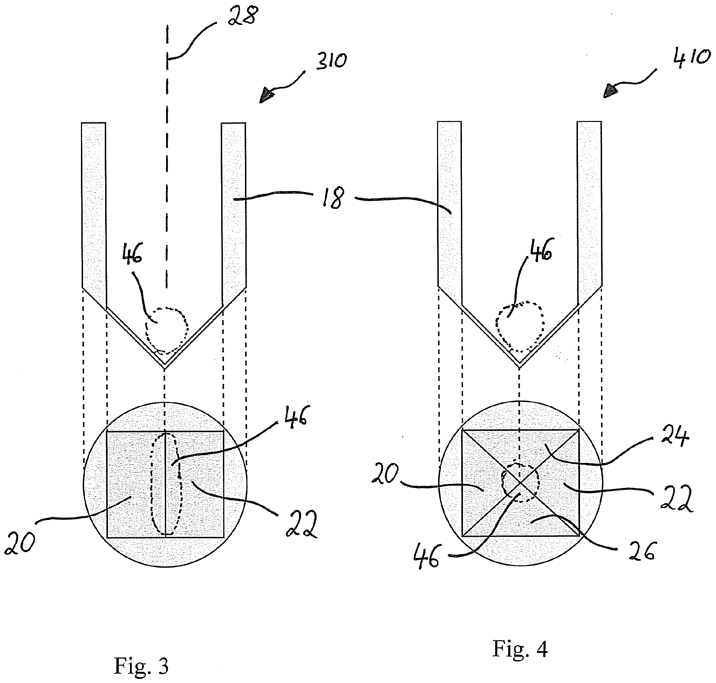

Die Figuren 3 und 4 zeigen jeweils eine Küvette 310 und 410 gemäß verschiedener Beispiele, wobei die Küvette 310 der Figur 3 der Küvette 110 aus Figur 1 ähnelt und die Küvette 410 aus Figur 4 der Küvette 210 aus Figur 2 ähnelt. In den Figuren 3 und 4 ist oben jeweils ein Längsschnitt der Küvette 310 bzw. 410 entlang einer Längsachse 28 gezeigt. Unten in den Figuren 3 und 4 ist jeweils eine Unteransicht der Küvette 310 bzw. 410 gezeigt, die sich ergibt, wenn die Küvette 310 bzw. 410 von unten entlang ihrer Längsachse 28 betrachtet wird.

Auch wenn dies in den Längsschnitten der Figuren 3 und 4 nur für die erste und zweite Bodenwand 20 und 22 zu erkennen ist, handelt es sich bei sämtlichen Bodenwänden 20 bis 26 um planparallele Wände, d.h. die gegenüberliegenden Außenflächen einer Bodenwand liegen in parallelen Ebenen, sodass die Bodenwand eine gleichmäßige Dicke aufweist, die dem Abstand der parallelen Ebenen entspricht.

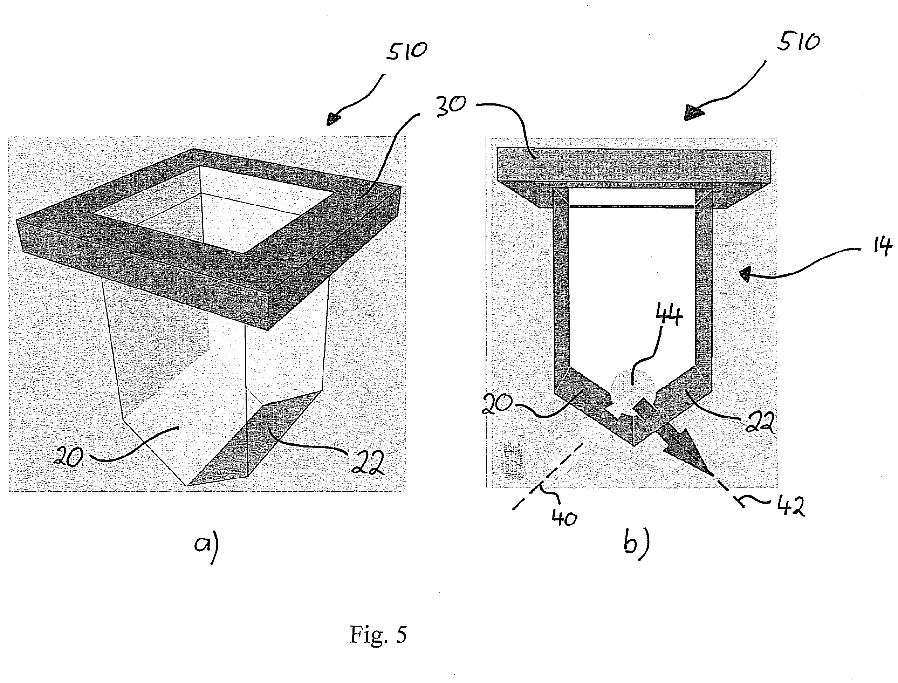

Die Figuren 5 a) und 5 b) zeigen jeweils eine Perspektivansicht und eine perspektivische Seitenansicht einer Küvette 510 gemäß einem weiteren Beispiel, die - wie auch die Küvetten 110 und 310 - zwei Bodenwände aufweist, nämlich eine erste Bodenwand 20 und eine zweite Bodenwand 22, deren Flächennormalen in einem Winkel von 90° zueinander geneigt sind. Im Unterschied zu den zuvor genannten Ausführungsformen 110 und 310 hat der obere Abschnitt 14 der Küvette 510 aus Figur 5 einen quadratischen Querschnitt und umfasst die Küvette 510 zusätzlich einen Küvettenrahmen 30.

Der Küvettenrahmen 30 kann als ein Verbindungsmittel dienen, über das mehrere Küvetten 510 zu einer Küvetten-Reihe und/oder zu einem Küvetten-Array verbunden werden können. Eine solche Küvetten-Reihe oder ein solches Küvetten-Array, die mehrere einzelne Küvetten 510 umfassen, die über ihre Küvettenrahmen 30 miteinander verbunden sind, bilden eine Ausführungsform einer erfindungsgemäßen Mikrotiterplatte. Die einzelnen Küvetten 510 sind in der Mikrotiterplatte dabei vorzugsweise derart zueinander angeordnet, dass ihre Längsachsen 28 parallel zueinander verlaufen.

Die Verbindung mit Hilfe der Küvettenrahmen 30 kann dabei über eine Steckverbindung (nicht gezeigt) vorgenommen werden. In diesem Beispiel umfasst der Küvettenrahmen 30 weiterhin einen oder mehrere Pins (nicht dargestellt) und ein oder mehrere Löcher (nicht dargestellt), sodass für eine Verbindung die Pins eines Küvettenrahmens 30 in die Löcher eines benachbarten Küvettenrahmens 30 gesteckt werden können. In einer anderen Ausführungsform besteht die Verbindung aus einer Magnetverbindung (nicht gezeigt).

In anderen Beispielen übernimmt der Küvettenrahmen 30 alternativ oder zusätzlich die Funktion eines Halterungsmittels. In einem Beispiel, welches nicht Teil der beanspruchten Erfindung ist, umfasst eine Mikrotiterplatte einen Rahmen zur Aufnahme mehrerer Küvetten 510. In dieser Ausführungsform können aufgenommenen Küvetten 510 über ihren Küvettenrahmen 30 in dem genannten Rahmen gehalten werden.

Eine nicht dargestellte Küvette umfasst einen oberen Abschnitt 14 mit einem kreisförmigen Querschnitt, beispielsweise wie in den Figuren 1 und 2 dargestellt, und einen Küvettenrahmen 30, der auf den kreisförmigen oberen Abschnitt 14 angepasst ist. Eine solche Küvette ist in einer Mikrotiterplatte vorgesehen, in welcher die einzelnen Küvetten frei drehbar um ihre Längsachse 28 in den Rahmen aufgenommen werden können.

In einer Ausführungsform einer erfindungsgemäßen Mikrotiterplatte sind die einzelnen Küvetten nicht aus einem Rahmen entnehmbar oder in diesen einsetzbar, sondern ist die Mikrotiterplatte einstückig gebildet, beispielsweise aus einem Polymer und/oder aus Glas.

In einer bevorzugten Ausführungsform ist die erfindungsgemäße Mikrotiterplatte einschließlich ihrer Küvetten durch ein thermisches Formungsverfahren aus einer dünnen Polymerfolie gebildet. Beispiele für geeignete Ausgangsmaterialien zur einstückigen Herstellung einer Mikrotiterplatte sind in der folgenden Tabelle angegeben:

| Bezeichnung des Polymermaterials | Brechungsindex | Dicke erhältlicher Polymerfolien |
|---|---|---|
| Cyclo-Olefin-Polymer | 1,509; 1,525; 1,531; 1,535 | 100 µm |
| Tetrafluorethylen-Perfluorpropylen (FEP), PFA, | 1,350 | 12,5 µm; 25 µm; 50 µm; 125 µm |
| Polyamid | 1,54 | Als Granulat erhältlich, aus dem eine Folie hergestellt werden kann |
| Polyimid | 1,66 | Von 7,9 µm bis 152 µm |

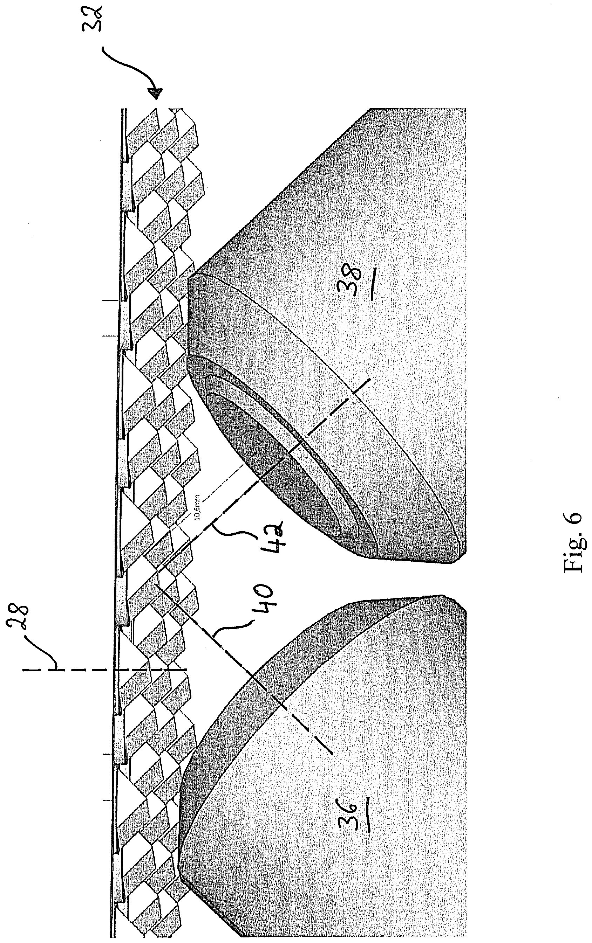

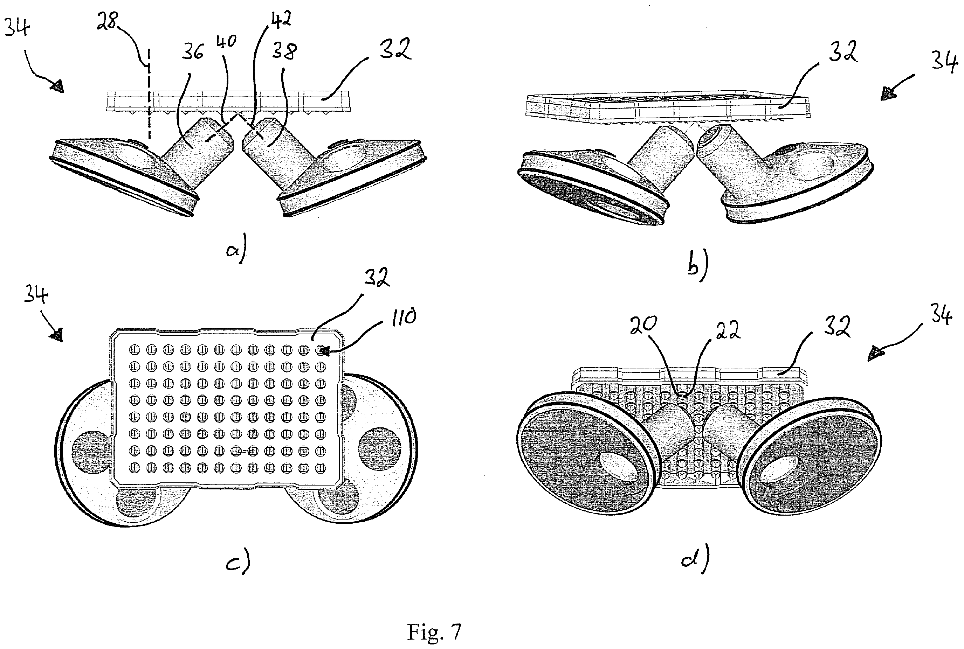

Eine erfindungsgemäße Mikrotiterplatte 32 gemäß einer Ausführungsform, die mehrere Küvetten 110 der Figur 1 umfasst, ist in der Figur 6 und den Figuren 7 a) bis 7 d) dargestellt.

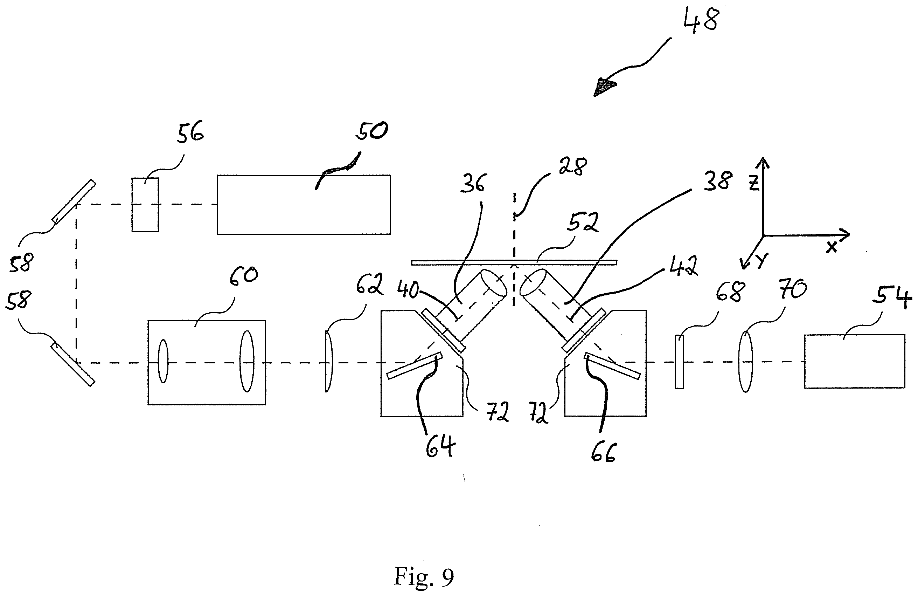

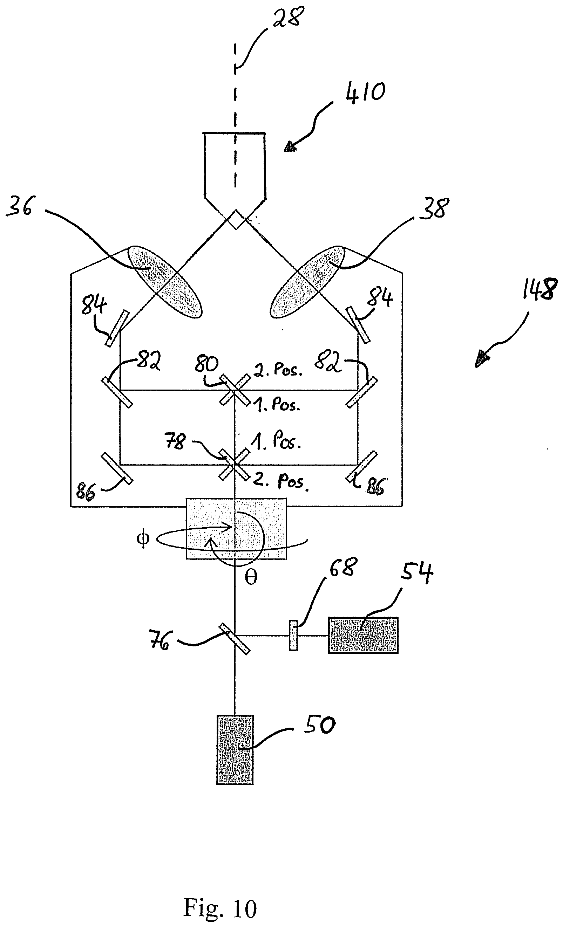

Die Figuren 6 und 7 zeigen einen Teil eines erfindungsgemäßen Systems 34, das eine Lichtscheiben-Fluoreszenz-Mikroskopie(LSFM)-Anordnung umfasst, die weiter unten anhand der Figuren 9 und 10 noch ausführlich beschrieben wird, und das eine erfindungsgemäße Mikrotiterplatte 32 umfasst. Wie in den Figuren 6 und 7 dargestellt, umfasst die LSFM-Anordnung ein Beleuchtungsobjektiv 36 und ein Detektionsobjektiv 38. Das Beleuchtungsobjektiv 36 und das Detektionsobjektiv 38 definieren eine Beleuchtungsrichtung 40 und eine Detektionsrichtung 42, die in den Figuren 6 und 7 a) durch gestrichelte Linien dargestellt sind. Bei dem erfindungsgemäßen System 34 aus den Figuren 6 und 7 ist die Mikrotiterplatte 32 horizontal oder waagerecht angeordnet, sodass die Längsachsen 28 der einzelnen Küvetten 110 vertikal ausgerichtet sind und die Öffnungen 12 der Küvetten 110 nach oben weisen. Das Beleuchtungsobjektiv 36 und das Detektionsobjektiv 38 sind derart ausgerichtet, dass die Beleuchtungsrichtung 40 und die Detektionsrichtung 42 jeweils um 45° gegenüber den Längsachsen 28 geneigt sind.

Mit dem System 34 können in den Küvetten 110 befindliche Proben derart untersucht werden, dass die Probe durch eine Anregungslichtebene beleuchtet wird, die mit Hilfe des Beleuchtungsobjektives 36 entlang der Beleuchtungsrichtung senkrecht durch die erste oder zweite Bodenwand 20 oder 22 an einen Probenort in der Küvette 110 fokussiert wird. Außerdem kann solches Fluoreszenzlicht detektiert werden, das die Probe senkrecht zur Lichtebene und senkrecht durch die zweite bzw. erste Bodenwand 22 bzw. 20 aussendet.

Eine solche Probenbeleuchtung bzw. Probenanregung und Fluoreszenzemission ist schematisch in Figur 5 b) dargestellt, in der eine Fluoreszenzprobe 44, die sich an einem Probenort befindet, mit Anregungslicht entlang der Beleuchtungsrichtung 40 beleuchtet wird und Fluoreszenzlicht in Detektionsrichtung 42 senkrecht zur Beleuchtungsrichtung 40 und senkrecht zur zweiten Bodenwand 22 durch die zweite Bodenwand 22 aussendet.

Für eine Untersuchung einer Vielzahl von Fluoreszenzproben 44 mit Hilfe eines erfindungsgemäßen Systems 34 können die Proben 44 mitsamt eines Probenmediums durch die Öffnungen 12 in die einzelnen Küvetten 110 der Mikrotiterplatte 32 eingebracht werden. Da die Mikrotiterplatte 32 für die Untersuchung horizontal ausgerichtet ist, d.h. die Küvetten 110 mit ihrer Längsachse 28 vertikal ausgerichtet sind, gelangen die Proben 44 aufgrund der Schwerkraft an einen Probenort am Boden der Küvetten und innerhalb der Küvetten, der direkt an die erste Bodenwand 20 und die zweite Bodenwand 22 angrenzt. Dementsprechend grenzt der Probenort bei den Küvetten 210 und 410 gemäß der Ausführungsformen aus Figur 2 und Figur 4 direkt an alle vier Bodenwände 20 bis 26 an.

Wie in der Figur 3 dargestellt, verläuft der Probenort 46 bei den Küvetten 110 und 310 der Figuren 1 und 3 entlang einer Linie am Boden der Küvetten 110 und 310. Die Größe des Probenortes 46 entspricht dabei etwa einem zylinderförmigen Volumen, wobei der Zylinder etwa einen der Probe entsprechenden Durchmesser hat und eine Länge hat, die der Länge der Grenzlinie zwischen der ersten und zweiten Bodenwand 20 und 22 entspricht.

Wie in der Figur 4 dargestellt ist, befindet sich der Probenort 46 bei den Küvetten 210 und 410 mit jeweils vier Bodenwänden 20 bis 26 in der Mitte des Küvettenbodens oberhalb der Spitze der durch die vier Bodenwände 20 bis 26 gebildeten, umgedrehten Pyramide. Die Größe des Probenortes 46 entspricht dabei etwa dem Volumen der Probe.

Es ist zu beachten, dass in anderen nicht dargestellten Ausführungsformen der Küvettenboden nicht die Form eines umgedrehten Trapezdaches oder einer umgedrehten Pyramide hat - wie es beispielsweise in den Figuren 3 und 4 dargestellt ist - sondern die Form eines umgedrehten Trapezdachstupfes oder eines umgedrehten Pyramidenstupfes hat. Auch wenn bei solchen Ausführungsformen der Probenort im Vergleich zu anderen Ausführungsformen etwas größer sein kann, handelt es sich dennoch um ein kleines Volumen, in dem die Probe immer noch sehr gut und schnell auffindbar ist. Auch bei diesen Ausführungsformen kann die Probe durch die geneigten Bodenwände auf vorteilhafte Art untersucht werden.

Mit Hilfe der Küvetten können somit eine Vielzahl von kleinen Fluoreszenzproben, die beispielsweise einen Durchmesser von etwa einigen 10 µm bis etwa einigen 100 µm aufweisen können, ohne eine aufwändige Positionierung oder Handhabung an einen bekannten, schnell auffindbaren und die Probe eng eingrenzenden Probenort 26 gebracht werden. Dadurch kann in dem System 34 die Mikrotiterplatte 32 mit Hilfe eines Positioniermittels ohne Weiteres derart zu dem Beleuchtungsobjektiv 36 und dem Detektionsobjektiv 38 ausgerichtet werden, dass die Objektive 36 und 38 auf einen bestimmten Probenort einer bestimmten Küvette gerichtet sind. Da die Probenorte 46 jeweils nur einen kleinen Bereich umfassen, kann die zu untersuchende Fluoreszenzprobe schnell gefunden werden. Das erfindungsgemäße System 34 ermöglicht damit eine schnelle und effiziente Untersuchung einer Vielzahl von Proben und ist besonders gut für eine Untersuchung mit einem hohen Probendurchsatz geeignet.

Die inverse Untersuchungsanordnung des Systems 34, bei dem die Beleuchtung und die Detektion von unten erfolgen, hat den Vorteil, dass sowohl das Beleuchtungsobjektiv 36 als auch das Detektionsobjektiv 38 unterhalb der Mikrotiterplatte 32 angeordnet sind, sodass die einzelnen Küvetten 110 von oben frei zugänglich sind und ausreichend Platz zur Verfügung steht, um einzelne Küvetten zu entfernen oder auszutauschen oder um beispielsweise Proben und/oder Probenmedien zu entnehmen, hinzuzufügen oder auszutauschen.

Aufgrund der Anordnung ihrer Bodenwände gestattet es die Küvette, senkrecht zu einer angeregten Probenebene emittiertes Fluoreszenzlicht zu detektieren, wobei gleichzeitig sowohl das Anregungslicht als auch das detektierte Fluoreszenzlicht senkrecht durch die entsprechenden Bodenwände hindurchtritt. Dadurch kann einerseits die anregende Lichtebene ohne optische Verzerrung oder zumindest mit geringer optischer Verzerrung in die Probe fokussiert werden. Andererseits können die angeregten Probenstrukturen der beleuchteten Probenebene gleichmäßig und ohne optische Verzerrung oder zumindest mit geringer optischer Verzerrung abgebildet und detektiert werden. Dadurch kann eine hohe Abbildungsqualität und eine hohe Qualität der Probenuntersuchung zur Verfügung gestellt werden.

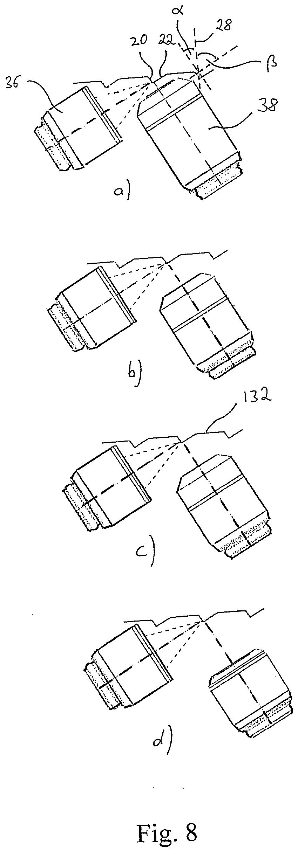

Eine Untersuchung mit Hilfe einer Mikrotiterplatte 132 gemäß einer anderen Ausführungsform ist in den Figuren 8 a) bis 8 d) dargestellt. Bei der Mikrotiterplatte 132 sind die erste und zweite Bodenwand 20 und 22 der Küvetten derart angeordnet, dass der Winkel α zwischen der Flächennormalen der zweiten Bodenwand 22 und der Längsachse 28 der Küvetten kleiner ist als der Winkel β zwischen der Flächennormalen der ersten Bodenwand 20 und der Längsachse 28. Damit verläuft bei einer Untersuchung, bei der die Mikrotiterplatte 132 horizontal ausgerichtet ist, die zweite Bodenwand 22 flacher als die erste Bodenwand 20. Wenn das Fluoreszenzlicht senkrecht durch die zweite Bodenwand 22 empfangen wird, dann ist das Detektionsobjektiv 38, entsprechend der Richtung der Flächennormalen der zweiten Bodenwand 22, steiler zur Ebene der Mikrotiterplatte ausgerichtet. Daher kann das Detektionsobjektiv 38 näher an die Mikrotiterplatte 132 herangebracht werden, ohne an die diese anzustoßen. Dadurch können bei einer Untersuchung Detektionsobjektive 38 mit einem geringeren Arbeitsabstand verwendet werden. Der Arbeitsabstand bezeichnet den Abstand zwischen der Objektivöffnung und dem zu detektierenden Bereich der Probe. In den Figuren 8 a) bis 8 d) wird jeweils dasselbe Beleuchtungsobjektiv 36 mit unterschiedlichen Detektionsobjektiven 38 verwendet. Das Beleuchtungsobjektiv 36 hat einen Arbeitsabstand von 22,5 mm. Der Arbeitsabstand des Detektionsobjektivs 38 beträgt 3,4 mm in Figur 8 a), 10,6 mm in Figur 8 b), 12 mm in Figur 8 c) und 21,0 mm in Figur 8 d).

Anhand der zuvor genannten Ausführungen wird deutlich, dass mit Hilfe der Mikrotiterplatte 132 ein System bereitgestellt werden kann, das die bereits zuvor genannten Vorteile aufweist und das den zusätzlichen Vorteil bietet, dass ein Detektionsobjektiv mit einem geringen Arbeitsabstand und einer damit einhergehenden hohen Vergrößerung verwendet werden kann. Beispielsweise weist das Detektionsobjektiv 38 aus Figur 8 a) mit einem Arbeitsabstand von 3,4 mm eine 100-fache Vergrößerung auf.

Figur 9 zeigt eine erfindungsgemäße LSFM-Anordnung 48 gemäß einer Ausführungsform, die als Teil des zuvor beschriebenen Systems 32 verwendet werden kann. Die LSFM-Anordnung umfasst einen Laser 50, ein Beleuchtungsobjektiv 36, ein Detektionsobjektiv 38, einen XYZ-Verschiebetisch 52 und eine CCD-Kamera 54. Bei einer Probenuntersuchung mit Hilfe der LSFM-Anordnung 48 durchläuft das vom Laser 50 erzeugte Anregungslicht zunächst einen optoelektronischen Shutter 56, mit dem die Beleuchtung bedarfsweise abgeschaltet werden kann. Das aus dem Shutter 56 austretende Anregungslicht wird über zwei Spiegel 58 zu einem Strahlaufweiter 60 abgelenkt, durch den der Anregungslichtstrahl aufgeweitet wird. Anschließend durchläuft der aufgeweitete Anregungslichtstrahl eine Zylinderlinse, sodass der Anregungslichtstrahl die Form einer Lichtscheibe annimmt. Der Anregungsstrahl wird über einen Spiegel 64 zu dem Beleuchtungsobjektiv 36 abgelenkt, durch welches der lichtscheibenförmige Anregungsstrahl fokussiert wird. Mit Hilfe des XYZ-Verschiebetisches 52 kann eine erfindungsgemäßen Mikrotiterplatte so verschoben werden, dass ein bestimmter Probenort mit der zu untersuchenden Probe (nicht gezeigt) an den Ort der fokussierten Lichtebene positioniert wird und die Probenposition zur Lichtebene eingestellt wird. Das von der Probe senkrecht zur Lichtebene ausgesendete Fluoreszenzlicht wird mit Hilfe des Detektionsobjektives 38 empfangen und über einen Spiegel 66, durch einen Filter 68 und durch eine Linse 70 an die CCD-Kamera 54 zur Detektion weitergeleitet.

In der LSFM-Anordnung 48 sind die Objektive 36 und 38 mit Hilfe eines jeweiligen Halters 72 derart ausgerichtet, dass die Beleuchtung der Probe mit Anregungslicht und das Empfangen des emittierten Fluoreszenzlichtes jeweils schräg von unten in Bezug auf die horizontal ausgerichtete und mit Hilfe des XYZ-Verschiebetisches 52 positionierte Mikrotiterplatte erfolgt. Die Beleuchtungsrichtung und die Detektionsrichtung sind jeweils um 45° zu den Längsachsen 28 der Küvetten geneigt und spannen eine vertikale Ebene auf, die parallel zur Zeichnungsebene liegt.

Für eine dreidimensionale Untersuchung einer Probe wird die beleuchtende oder anregende Lichtscheibe in Bezug auf die Probe verschoben, sodass mit Hilfe eines solchen Abtastens der Probe nacheinander unterschiedliche Probenebenen detektiert werden können. Für ein solches Abtasten wird die Mikrotiterplatte vorzugsweise in Detektionsrichtung 42 verschoben, sodass die untersuchte Probe senkrecht durch die fokussierte Lichtebene geschoben wird. Anders als bei einer Verschiebung der Probe in X-Richtung schräg zur Lichtebene, bleibt das Anregungslicht bei einem Verschieben senkrecht zur Lichtebene während einer vollständigen Probenabtastung gleichbleibend in der Probe fokussiert, sodass eine scharfe dreidimensionale Abbildung und damit eine Untersuchung mit einer hohen Qualität zur Verfügung gestellt werden kann.

Eine LSFM-Anordnung 148 gemäß einer anderen Ausführungsform ist in Figur 10 dargestellt. Die LSFM-Anordnung 148 umfasst ein Stellmittel 74, mit dem das Beleuchtungsobjektiv 36 und das Detektionsobjektiv 38 gemeinsam um einen Winkel ϕ um eine vertikale Achse gedreht werden können und/oder um einen Winkel θ gegenüber der vertikalen Achse verkippt werden können. Die vertikale Achse entspricht bei einer Probenuntersuchung der Längsachse 28 der Küvette, in der sich die Probe befindet. Die LSFM-Anordnung 148 umfasst einen ersten Strahlteiler-Spiegel 76, einen ersten verstellbaren Spiegel 78, einen zweiten verstellbaren Spiegel 80, zwei zweite Strahlteiler-Spiegel 82, zwei Spiegel 84 und zwei Spiegel 86.

Der erste Strahlteiler-Spiegel 76 und der erste verstellbare Spiegel 78 sind für das Anregungslicht des Lasers 50 durchlässig und für das von der Probe ausgesandte Fluoreszenzlicht reflektierend. Im Gegensatz dazu sind die zweiten Strahlteiler-Spiegel 82 für das Anregungslicht reflektierend und für das Fluoreszenzlicht durchlässig. Der erste verstellbare Spiegel 78 und der zweite verstellbare Spiegel 80 sind kontinuierlich zwischen einer jeweiligen ersten Position und einer jeweiligen zweiten Position verstellbar, insbesondere kippbar, wobei sich die ersten Positionen und die zweiten Positionen in Abhängigkeit des Drehwinkels ϕ und des Kippwinkels θ verändern. Der erste und der zweite verstellbare Spiegel 78 und 80 sind weiterhin um die vertikale Achse drehbar. In einer Ausführungsform können sie auch entlang und/oder quer zur vertikalen Achse verschiebbar sein.

Das durch den ersten Strahlteiler-Spiegel 76 hindurchtretende Anregungslicht tritt durch den ersten verstellbaren Spiegel 78 hindurch und wird anschließend nacheinander über den zweiten verstellbaren Spiegel 80, einen der Spiegel 82 und einen der Spiegel 84 derart abgelenkt, dass es in das Beleuchtungsobjektiv 36 entlang seiner optischen Achse eintritt. Wie weiter unten beschrieben ist, kann das Anregungslicht auch in das Detektionsobjektiv 38 entlang seiner optischen Achse eintreten, wobei sich der zweite verstellbare Spiegel 80 in einer anderen Position befindet und das Ablenken jeweils über den anderen der Spiegel 82 und 84 erfolgt.

Das aus dem Detektionsobjektiv 38 entlang seiner optischen Achse austretende Fluoreszenzlicht wird von einem der Spiegel 84 abgelenkt, so dass es durch einen der Spiegel 82 hindurchtritt und auf einen der Spiegel 86 auftrifft. Über den Spiegel 86, den ersten verstellbaren Spiegel 78 und den ersten Strahlteiler-Spiegel 76 wird das Fluoreszenzlicht nacheinander und zu der CCD-Kamera 54 abgelenkt, so dass es von ihr detektiert werden kann. Wie weiter unten beschrieben ist, kann das Fluoreszenzlicht auch aus dem Beleuchtungsobjektiv 36 entlang seiner optischen Achse austreten, wobei das Ablenken jeweils über den anderen der Spiegel 84 und 86 und durch den anderen der Spiegel 82 erfolgt und wobei sich der erste verstellbare Spiegel 78 in einer anderen Position befindet.

In einer Ausführungsform der LSFM-Anordnung 148 sind das Beleuchtungsobjektiv 36, das Detektionsobjektiv 38 sowie die Spiegel 82, 84 und 86 zueinander unbeweglich und können gemeinsam als Einheit gedreht und/oder gekippt werden, wobei der Laser 50 und die CCD-Kamera 54 nicht mitgedreht und nicht mitgekippt werden. Wenn beim Drehen und/oder Kippen die Position und die Ausrichtung des zweiten verstellbaren Spiegels 80 unverändert bliebe, dann würde das Anregungslicht den zweiten verstellbaren Spiegel 80 von der ursprünglichen Position und in die ursprüngliche Richtung verlassen - d.h. weiterhin auf demselben Weg verlassen - und nicht entlang der gedrehten bzw. gekippten optischen Achse des Beleuchtungsobjektivs 36 durch das Beleuchtungsobjektiv 36 hindurchtreten. Der zweite verstellbare Spiegels 80 ist jedoch derart verstellbar, dass das vom ursprünglichen Weg kommenden Anregungslicht den zweiten verstellbaren Spiegel 80 auf einem veränderten Weg verlassen kann, auf dem es entlang der optischen Achse des gedrehten bzw. gekippten Beleuchtungsobjektivs 36 durch das Beleuchtungsobjektiv 36 hindurchtritt.

Wenn das Detektionsobjektiv 38 gedreht und/oder gekippt wird, dann kommt das empfangene und aus dem Detektionsobjektiv 38 ausgetretene Licht aus einer anderen Richtung bzw. aus einer anderen Richtung und an einer anderen Position beim ersten verstellbaren Spiegel 78 an. Wenn beim Drehen und/oder Kippen die Position und die Ausrichtung des ersten verstellbaren Spiegels 78 unverändert bliebe, dann würde das Licht den ersten verstellbaren Spiegel 78 nicht auf dem ursprünglichen Weg verlassen und daher nicht oder schlechter von der CCD-Kamera 54 detektiert. Der erste verstellbare Spiegel 78 ist jedoch derart verstellbar, dass auch das vom gedrehten und/oder gekippten Detektionsobjektiv 38 auf einem anderen Weg kommende Licht den ersten verstellbaren Spiegel 78 auf dem ursprünglichen Weg verlassen kann, so dass es aus der ursprünglichen Richtung auf die ursprüngliche Position der CCD-Kamera 54 auftreffen und zumindest annähernd unverändert von ihr detektiert werden kann.

Das Verstellen des ersten und zweiten verstellbaren Spiegels 78 und 80 kann ein Kippen zwischen der ersten und der zweiten Position, ein Drehen um die vertikale Achse und ein Verschieben entlang der vertikalen Achse und/oder quer zu der vertikalen Achse umfassen.

In einer anderen Ausführungsform der LSFM-Anordnung 148 sind die Objektive 36 und 38 und die Spiegel 82, 84 und 86 nicht gänzlich zueinander unbeweglich, sondern die Spiegel 82 und 86 sind kippbar. In dieser Ausführungsform kann die oben beschriebene Anpassung der Lichtwege beim Kippen der Objektive 36 und 38 durch ein kombiniertes Kippen des ersten verstellbaren Spiegels 78 und eines der Spiegel 86 sowie durch ein kombiniertes Kippen des zweiten verstellbaren Spiegels 80 und eines der Spiegel 82 vorgenommen werden. Die Anpassung der Lichtwege an das Drehen der Objektive 36 und 38 kann wie bei der zuvor beschriebenen Ausführungsform allein durch ein Drehen des ersten und des zweiten verstellbaren Spiegels 78 und 80 vorgenommen werden. Ein Verschieben eines Spiegels ist bei dieser Ausführungsform für eine Anpassung nicht erforderlich.

In der LSFM-Anordnung 148 kann das Beleuchtungsobjektiv 36 auch zum Empfangen von Fluoreszenzlicht eingesetzt werden und das Detektionsobjektiv 38 kann auch zum Fokussieren von Anregungslicht eingesetzt werden. Mit Hilfe des ersten und zweiten verstellbaren Spiegels 78 und 80 können die Beleuchtungsrichtung und die Detektionsrichtung auf einfache Art und Weise vertauscht werden, indem die verstellbaren Spiegel 78 und 80 von der ersten Position in die zweite Position oder von der zweiten Position in die erste Position gestellt werden. Wenn sich die Spiegel 78 und 80 in der ersten Position befinden, erfolgt die Beleuchtung über das Beleuchtungsobjektiv und das Empfangen des Fluoreszenzlichtes über das Detektionsobjektiv 38. Wenn sich die Spiegel 78 und 80 in der zweiten Position befinden, erfolgt die Beleuchtung der Probe über das Detektionsobjektiv 38 und das Empfangen des Fluoreszenzlichtes über das Beleuchtungsobjektiv 36.

Die oben beschriebene LSFM-Anordnung 148 kann besonders vorteilhaft für die Untersuchung einer Probe eingesetzt werden, die sich in einer Küvette 410 mit vier Bodenwänden befindet. Bei dieser Untersuchung kann die Probe aus vier unterschiedlichen Richtungen mit einer hohen Qualität untersucht werden. Für eine derartige Untersuchung müssen das Beleuchtungsobjektiv und das Detektionsobjektiv jedoch nicht jeweils in vier, sondern nur jeweils in zwei entsprechende Drehwinkelpositionen gebracht werden. Für die Untersuchung einer Probe aus vier um 90° zueinander gedrehten Richtungen müssen die Objektive nicht um 360° um die vertikale Achse gedreht werden, sondern nur um 90°. Dadurch kann die Zeit, die für ein Drehen der Objektive benötigt wird, erheblich reduziert werden, nämlich um nahezu 75%. Insbesondere bei der Untersuchung einer Vielzahl von Proben aus jeweils vier um 90° zueinander gedrehten Perspektiven kann damit viel Zeit gespart werden.

Die LSFM-Anordnungen 48 und 148 gemäß der Ausführungsformen aus Figur 9 und Figur 10 können auch miteinander kombiniert werden, sodass in einem erfindungsgemäßen System, das eine LSFM-Anordnung umfasst und eine Mikrotiterplatte umfasst, sowohl die Mikrotiterplatte als auch die Objektive positionierbar sein können.

Weiterhin können die zuvor beschriebenen Ausführungsformen der Mikrotiterplatte auch in einer FSFM-Anordnung verwendet werden, in der sich zwischen den Objektiven und den Bodenwänden und/oder in der Küvette eine Immersionsflüssigkeit befindet, beispielsweise Wasser oder eine wässrige Lösung, wodurch die Brechungsindexunterschiede für das Anregungslicht und für das Fluoreszenzlicht an den Grenzflächen der Bodenwände und der Probe reduziert werden können. Dadurch kann die Abbildungsqualität weiter verbessert werden.

Es wird darauf hingewiesen, dass die zuvor beschriebenen Ausführungsformen als rein beispielhaft und die Erfindung nicht einschränkend anzusehen sind.

### BEZUGSZEICHENLISTE

- 110, 210, 310, 410, 510: Küvette
- 12: Öffnung
- 14: oberer Abschnitt
- 16: unterer Abschnitt
- 18: Seitenwand
- 20: erste Bodenwand
- 22: zweite Bodenwand
- 24: dritte Bodenwand
- 26: vierte Bodenwand
- 28: Längsachse
- 30: Küvettenrahmen
- 32, 132: Mikrotiterplatte
- 3,4: System
- 36: Beleuchtungsobjektiv
- 38: Detektionsobjektiv
- 40: Beleuchtungsrichtung
- 42: Detektionsrichtung
- 44: Fluoreszenzprobe
- 46: Probenort
- 48, 148: LSFM-Anordnung
- 50: Laser
- 52: XYZ-Verschiebetisch
- 54: CCD-Kamera
- 56: optoelektronischer Shutter
- 58, 64, 66, 84, 86: Spiegel
- 60: Strahlaufweiter
- 62: Zylinderlinse
- 68: Filter
- 70: Linse
- 72: Halter
- 74: Stellmittel
- 76: erster Strahlteiler-Spiegel
- 78: erster verstellbarer Spiegel
- 80: zweiter verstellbarer Spiegel
- 82: zweiter Strahlteiler-Spiegel

## Patentansprüche

1. Mikrotiterplatte (32, 132) zur Aufnahme und Positionierung von Proben (44) für eine Untersuchung mittels inverser Fluoreszenzmikroskopie, insbesondere inverser Lichtscheiben-Fluoreszenz-Mikroskopie, wobei die Mikrotiterplatte einstückig gebildet ist und mehrere Küvetten (110, 210, 310, 410, 510) umfasst, wobei die Küvetten (110, 210, 310, 410, 510) jeweils eine Öffnung (12), die an einem oberen Ende der Küvette (110, 210, 310, 410, 510) angeordnet ist, umfassen, **dadurch gekennzeichnet, dass** die Küvetten jeweils folgendes umfassen:
- eine erste und eine zweite transparente Bodenwand (20, 22), die derart zueinander angeordnet sind, dass ihre Flächennormalen mit einem Winkel zwischen 70° und 110°, vorzugsweise zwischen 80° und 100°, besonders vorzugsweise zwischen 85° und 95° und insbesondere von zumindest annähernd 90° zueinander geneigt sind,
wobei der Winkel (α) zwischen der Flächennormalen der zweiten Bodenwand (22) der Küvetten (110, 210, 310, 410, 510) und der Längsachse der jeweilige Küvette (110, 210, 310, 410, 510) kleiner ist als der Winkel (β) zwischen der Flächennormalen der ersten Bodenwand (20) der Küvetten (110, 210, 310, 410, 510) und der Längsachse der jeweilige Küvette (110, 210, 310, 410, 510), insbesondere kleiner als 40° ist und vorzugsweise zwischen 35° und 10° liegt, sodass die zweite Bodenwand (22) bei einer Untersuchung, bei der die Mikrotiterplatte (32, 132) horizontal ausgerichtet ist, flacher als die erste Bodenwand (20) verläuft, und/oder
wobei die Wandstärke der ersten Bodenwand (20) und der zweiten Bodenwand (22) der Küvetten (110, 210, 310, 410, 510) zwischen 12,5 µm und 160 µm liegt,
wobei die Mikrotiterplatte (32, 132) vorzugsweise einstückig aus einem Polymer, insbesondere durch thermische Formung aus einer Polymerfolie gebildet ist.

2. Mikrotiterplatte (32, 132) nach Anspruch 1, bei der die Bodenwände (20, 22, 24, 26) der Küvetten (110, 210, 310, 410, 510) derart transparent sind, dass die Transmission in zwei Wellenlängenbereichen, die eine Breite von mindestens 20 nm aufweisen und sich zwischen 300 nm und 1200 nm, insbesondere zwischen 400 nm und 800 nm befinden, mindestens 50%, vorzugsweise mindestens 70%, besonders vorzugsweise mindestens 90% beträgt, und/oder
wobei die Küvetten (110, 210, 310, 410, 510) zumindest teilweise aus einem Polymer, insbesondere aus Polyfluorethylen, Polytetrafluorethylen, Tetrafluorethylen, einem Cyclo-Olefin-Polymer, Perfluorpropylen, einem Polyamid oder einem Polyimid, oder zumindest teilweise aus Glas gebildet sind, und/oder
bei der die Bodenwände (20, 22, 24, 26) der Küvetten (110, 210, 310, 410, 510) zumindest abschnittsweise einen Brechungsindex zwischen 1,2 und 1,7 aufweisen.

3. Mikrotiterplatte (32, 132) nach einem der vorhergehenden Ansprüche,
wobei die Küvetten (110, 210, 310, 410, 510) weiterhin eine dritte und eine vierte transparente Bodenwand (24, 26) aufweisen, die
derart zueinander angeordnet sind, dass ihre Flächennormalen mit einem Winkel zwischen 70° und 110°, vorzugsweise zwischen 80° und 100°, besonders vorzugsweise zwischen 85° und 95° und insbesondere von zumindest annähernd 90° zueinander geneigt sind,
wobei die Bodenwände (20, 22, 24, 26) der Küvetten (110, 210, 310, 410, 510) vorzugsweise derart angeordnet sind, dass jedes Flächennormalen-Paar der vier genannten Flächennormalen einen Winkel zwischen 70° und 110°, vorzugsweise zwischen 80° und 100°, besonders vorzugsweise zwischen 85° und 95° und insbesondere von zumindest annähernd 90° einschließt, und/oder die Küvetten (110, 210, 310, 410, 510) einen elliptischen, insbesondere einen kreisförmigen Querschnitt aufweisen.

4. Mikrotiterplatte (32, 132) nach einem der vorhergehenden Ansprüche, wobei die Küvetten (110, 210, 310, 410, 510) einen Rechteckigen, insbesondere einen quadratischen Querschnitt aufweisen, und/oder
deren Küvetten (110, 210, 310, 410, 510) ein inneres Volumen zwischen 0,01 ml und 0,50 ml, vorzugsweise zwischen 0,05 ml und 0,2 ml, besonders vorzugsweise zwischen 0,09 ml und 0,13 ml fassen, und/oder
wobei die Küvetten (110, 210, 310, 410, 510) einen maximalen Innendurchmesser zwischen 3 mm und 9 mm, vorzugsweise zwischen 4 mm und 8 mm aufweisen, und/oder
wobei die Küvetten (110, 210, 310, 410, 510) eine Höhe zwischen 3 mm und 30 mm, vorzugsweise zwischen 3 mm und 20 mm, besonders vorzugsweise zwischen 3 mm und 10 mm aufweisen.

5. Mikrotiterplatte (32, 132) nach einem der vorhergehenden Ansprüche, wobei die Mikrotiterplatte folgendes umfasst:
- ein Array mit mehreren Küvetten (110, 210, 310, 410, 510), wobei das Array einstückig gebildet ist, und
- einen Rahmen zur Aufnahme des Arrays, wobei
die mehreren Küvetten (110, 210, 310, 410, 510) in einem Array angeordnet sind, insbesondere in einem (6 × 8)-, (8 × 12)-, (16 × 24)- oder einem (32 × 48)- Array.

6. Lichtscheiben-Fluoreszenz-Mikroskopie(LSFM)-Anordnung (48, 148) zur Untersuchung einer Probe (44), insbesondere zur Untersuchung einer Vielzahl von Proben mit einem hohen Durchsatz, die folgendes umfasst:
- eine Beleuchtungsquelle (50) zur Erzeugung von Anregungslicht,
- ein Beleuchtungsobjektiv (36) zum Empfangen des Anregungslichts und zum Fokussieren des Anregungslichtes in Form einer Lichtebene auf einen Probenort (46),
- ein Detektionsobjektiv (38) zum Empfangen von Fluoreszenzlicht, welches von einer am Probenort (46) positionierten Probe (44) ausgesandt wird, wobei die LSFM-Anordnung **dadurch gekennzeichnet ist, dass** das Beleuchtungsobjektiv (36) schräg nach oben gerichtet ist und wobei das Detektionsobjektiv (38) schräg nach oben gerichtet ist und in einem Winkel zwischen 70° und 110°, vorzugsweise zwischen 80° und 100°, besonders vorzugsweise zwischen 85° und 95°, insbesondere von zumindest annähernd 90°, zum Beleuchtungsobjektiv (36) angeordnet ist, und wobei die LSFM-Anordnung ferner
- Positioniermittel (52) zum relativen Positionieren einer einstückigen Mikrotiterplatte (32, 132) mit mehreren Küvetten (110, 210, 310, 410, 510) umfasst, wobei die Küvetten (110, 210, 310, 410, 510) jeweils eine Öffnung (12), die an einem oberen Ende der Küvette (110, 210, 310, 410, 510) angeordnet ist, und eine erste und eine zweite transparente Bodenwand (20, 22) umfassen, die derart zueinander angeordnet sind, dass ihre Flächennormalen mit einem Winkel zwischen 70° und 110° zueinander geneigt sind, in Bezug auf das Beleuchtungsobjektiv (36) und das Detektionsobjektiv (38), wobei die Positioniermittel (52) einen XYZ-Verschiebetisch umfassen.

7. LSFM-Anordnung (148) nach Anspruch 6, wobei die Positioniermittel (52) eingerichtet sind, die Mikrotiterplatte (32, 132) zumindest annähernd senkrecht zu der Lichtebene zu verschieben.

8. LSFM-Anordnung (148), nach Anspruch 6 oder 7, wobei die Anordnung (148) eingerichtet ist, die Mikrotiterplatte (32, 132) mithilfe der Positioniermittel (52) derart zu dem Beleuchtungsobjektiv (36) und dem Detektionsobjektiv (38) auszurichten, dass die Objektive (36, 38) auf einen bestimmten Probenort (26) einer bestimmten Küvette (110, 210, 310, 410, 510) gerichtet sind.

9. LSFM Anordnung (148) nach einem der Ansprüche 6 bis 8, wobei die LSFM-Anordnung (148) zur Untersuchung einer Mikrotiterplatte (32, 132) eingerichtet ist, bei der erste und zweite Bodenwände (20, 22) von Küvetten der Mikrotiterplatte (32, 132) derart angeordnet sind, dass der Winkel (α) zwischen der Flächennormalen der zweiten Bodenwand (22) der Küvetten (110, 210, 310, 410, 510) und der Längsachse der jeweilige Küvette (110, 210, 310, 410, 510) kleiner ist als der Winkel (β) zwischen der Flächennormalen der ersten Bodenwand (20) der Küvetten (110, 210, 310, 410, 510) und der Längsachse der jeweilige Küvette (110, 210, 310, 410, 510), und insbesondere zwischen 35° und 10° liegt, sodass die zweite Bodenwand (22) bei einer Untersuchung, bei der die Mikrotiterplatte (32, 132) horizontal ausgerichtet ist, flacher als die erste Bodenwand (20) verläuft, wobei das Detektionsobjektiv (38) bei seiner bevorzugten Ausrichtung in Richtung der Flächennormalen der zweiten Bodenwand (22) vergleichsweise steil und weniger zur vertikalen Richtung geneigt ausgerichtet ist, und wobei ein Arbeitsabstand des Detektionsobjektivs (38) vorzugsweise kleiner als ein Arbeitsabstand des Beleuchtungsobjektivs (36) ist.

10. LSFM-Anordnung (148) nach einem der Ansprüche 6 bis 9, bei der das Beleuchtungsobjektiv (36) und das Detektionsobjektiv (38) derart in einem Aufnahmemittel aufgenommen sind, dass sie gemeinsam um eine vertikale Achse drehbar sind und/oder gemeinsam gegenüber der vertikalen Achse kippbar sind, und/oder
die weiterhin folgendes umfasst
- ein Detektionsmittel (54) zum Detektieren von Fluoreszenzlicht,
- ein erstes Reflektionsmittel (80) zum Ablenken des Anregungslichts zu dem Beleuchtungsobjektiv (36),
- ein zweites Reflektionsmittel (78) zum Ablenken des vom Detektionsobjektiv (38) empfangenen Fluoreszenzlichts zu dem Detektionsmittel (54),
wobei das erste Reflektionsmittel (80) derart ausrichtbar ist, dass bei einem Kippen und/oder Drehen des Beleuchtungsobjektivs (36) das Anregungslicht derart durch das erste Reflektionsmittel (80) zu dem Beleuchtungsobjektiv (36) abgelenkt wird, dass es weiterhin zumindest näherungsweise in Richtung der optischen Achse in das Beleuchtungsobjektiv (36) eintritt, und
wobei das zweite Reflektionsmittel (78) derart ausrichtbar ist, dass bei einem Kippen und/oder Drehen des Detektionsobjektivs (38) das Fluoreszenzlicht vom gekippten und/oder gedrehten Detektionsobjektiv (38) durch das zweite Reflektionsmittel (78) weiterhin zumindest näherungsweise zu dem Detektionsmittel (54) abgelenkt wird, und/oder
bei der das Beleuchtungsobjektiv (36) auch zum Empfangen von Fluoreszenzlicht vom Probenort (46) geeignet ist und bei der das Detektionsobjektiv (38) auch zum Empfangen und Fokussieren des Anregungslichts geeignet ist, wobei die Anordnung weiterhin folgendes umfasst
- ein Detektionsmittel (54) zum Detektieren von Fluoreszenzlicht,
- ein drittes Reflektionsmittel (80) zum Ablenken des Anregungslichts zu dem Beleuchtungsobjektiv (36) oder zu dem Detektionsobjektiv (38),
- ein viertes Reflektionsmittel (78) zum Ablenken des vom Detektionsobjektiv (38) oder vom Beleuchtungsobjektiv (36) empfangenen Fluoreszenzlichts zu dem Detektionsmittel (54),
wobei das dritte und das vierte Reflektionsmittel (80, 78) jeweils in eine erste und in eine zweite Stellung verstellbar sind,
in der ersten Stellung das dritte Reflektionsmittel (80) zum Ablenken des Anregungslichts zu dem Beleuchtungsobjektiv (36) und das vierte Reflektionsmittel (78) zum Ablenken des vom Detektionsobjektiv (38) empfangenen Fluoreszenzlichts zu dem Detektionsmittel (54) eingestellt sind, und
in der zweiten Stellung das dritte Reflektionsmittel (80) zum Ablenken des Anregungslichts zu dem Detektionsobjektiv (38) und das vierte Reflektionsmittel (78) zum Ablenken des vom Beleuchtungsobjektiv (36) empfangenen Fluoreszenzlichts zu dem Detektionsmittel (54) eingestellt sind, wobei
das erste Reflektionsmittel (80) vorzugsweise dem dritten Reflektionsmittel (80) entspricht und das zweite Reflektionsmittel (78) vorzugsweise dem vierten Reflektionsmittel (78) entspricht, und das erste und das zweite Reflektionsmittel (80, 78) vorzugsweise für mindestens eine, besonders vorzugsweise für jede Kipp- und/oder Drehposition der Objektive (36, 38) die genannte erste und die genannte zweite Stellung aufweist.

11. System zur Untersuchung einer Probe (44) mittels Lichtscheiben-Fluoreszenz-Mikroskopie, insbesondere zur Untersuchung einer Vielzahl von Proben mit einem hohen Durchsatz, welches **dadurch gekennzeichnet ist, dass** es folgendes umfasst:
- eine Mikrotiterplatte (32, 132) nach einem der Ansprüche 1 bis 5 und/oder eine Mikrotiterplatte mit mehreren Küvetten, die jeweils einen horizontalen transparenten Boden umfassen,
- eine LSFM-Anordnung (48, 148) nach einem der Ansprüche 6 bis 10.

12. System nach Anspruch 11, bei dem das Beleuchtungsobjektiv (36) senkrecht auf eine Bodenwand (20, 22, 24, 26) und auf den Probenort (46) gerichtet ist, und bei dem das Detektionsobjektiv (38) senkrecht auf eine andere Bodenwand (20, 22, 24, 26) und ebenfalls auf den Probenort (46) gerichtet ist,
bei dem vorzugsweise eine durch das Beleuchtungsobjektiv (36) definierte Beleuchtungsrichtung (40), eine durch das Detektionsobjektiv (38) definierte Detektionsrichtung (42) und die Langsachse (28) mindestens einer Küvette (110, 210, 310, 410, 510) zumindest annähernd in einer vertikalen Ebene liegen.

13. Verfahren zur Untersuchung einer Probe (44), vorzugsweise einer Vielzahl von Proben mit einem hohen Durchsatz, mit einem System nach einem der Ansprüche 11 oder 12, wobei das Verfahren **dadurch gekennzeichnet ist, dass** es die folgenden Schritte umfasst:
- Fokussieren von Anregungslicht in Form einer Lichtebene an einem Probenort (46) innerhalb einer der mehreren Küvetten (110, 210, 310, 410, 510) zumindest annähernd senkrecht durch eine Bodenwand (20, 22, 24, 26),
- Detektieren von Fluoreszenzlicht, das von einer Probe (44) am Probenort (46) zumindest annähernd senkrecht zur Lichtebene und zumindest annähernd senkrecht durch eine andere Bodenwand (20, 22, 24, 26) ausgesandt wird.

14. Verfahren zur Untersuchung einer Probe (44), vorzugsweise einer Vielzahl von Proben mit einem hohen Durchsatz, mit einem System nach einem der Ansprüche 11 oder 12, wobei das Verfahren die folgenden Schritte umfasst:
- Ausrichten der Mikrotiterplatte (32, 132) mithilfe eines Positioniermittels (52) der LSFM-Anordnung (48, 148), insbesondere eines XYZ-Verschiebetischs, derart zu dem Beleuchtungsobjektiv (36) und dem Detektionsobjektiv (38) der LSFM-Anordnung (48, 148), dass die Objektive (36, 38) auf einen bestimmten Probenort (26) einer bestimmten Küvette (110, 210, 310, 410, 510) gerichtet sind, und/oder
- Fokussieren von Anregungslicht in Form einer Lichtebene an einem Probenort (46) innerhalb einer Küvette (110, 210, 310, 410, 510) durch einen der genannten horizontalen transparenten Böden in einem Winkel zwischen 40° und 50°, vorzugsweise von zumindest annähernd 45°, zur Flächennormalen des horizontalen transparenten Bodens,
- Detektieren von Fluoreszenzlicht, das von einer Probe (44) am Probenort (46) zumindest annähernd senkrecht zur Lichtebene und in einem Winkel zwischen 40° und 50°, vorzugsweise von zumindest annähernd 45°, zur Flächennormalen des horizontalen transparenten Bodens ausgesandt wird.

15. Verfahren nach Anspruch 13 oder 14, das weiterhin ein Abtasten einer Probe (44) am Probenort (46) umfasst, wobei die Probe zumindest annähernd senkrecht zur Lichtebene verschoben wird, und/oder
das weiterhin ein Abtasten mehrerer Proben (44), insbesondere einer Vielzahl von Proben umfasst.

## Claims

1. Microtiter plate (32, 132) for receiving and positioning samples (44) for examination by means of inverse fluorescence microscopy, in particular inverse light sheet fluorescence microscopy, wherein the microtiter plate is integrally formed and comprises a plurality of cuvettes (110, 210, 310, 410, 510), wherein the cuvettes (110, 210, 310, 410, 510) each comprise an opening (12) which is arranged at an upper end of the cuvette (110, 210, 310, 410, 510),
**characterized in that** the cuvettes each comprise the following:
- a first and a second transparent bottom wall (20, 22) which
are arranged with respect to one another such that their surface normals are inclined with respect to one another at an angle between 70° and 110°, preferably between 80° and 100°, particularly preferably between 85° and 95° and in particular of at least approximately 90°,
wherein the angle (α) between the surface normal of the second bottom wall (22) of the cuvettes (110, 210, 310, 410, 510) and the longitudinal axis of the respective cuvette (110, 210, 310, 410, 510) is smaller than the angle (β) between the surface normal of the first bottom wall (20) of the cuvettes (110, 210, 310, 410, 510) and the longitudinal axis of the respective cuvette (110, 210, 310, 410, 510), in particular is smaller than 40° and preferably lies between 35° and 10°, such that the second bottom wall (22) extends flatter than the first bottom wall (20) in an examination in which the microtiter plate (32, 132) is aligned horizontally, and/or
wherein the wall thickness of the first bottom wall (20) and the second bottom wall (22) of the cuvettes (110, 210, 310, 410, 510) lies between 12.5 µm and 160 µm,
wherein the microtiter plate (32, 132) is preferably integrally formed from a polymer, in particular by thermal forming from a polymer film.

2. The microtiter plate (32, 132) according to claim 1, in which the bottom walls (20, 22, 24, 26) of the cuvettes (110, 210, 310, 410, 510) are transparent such that the transmittance in two wavelength ranges, which have a width of at least 20 nm and are located between 300 nm and 1200 nm, in particular between 400 nm and 800 nm, is at least 50%, preferably at least 70%, particularly preferably at least 90%, and/or
wherein the cuvettes (110, 210, 310, 410, 510) are at least partially formed from a polymer, in particular from polyfluoroethylene, polytetrafluoroethylene, tetrafluoroeth-ylene, a cycloolefin polymer, perfluoropropylene, a polyamide or a polyimide, or at least partially from glass, and/or
in which the bottom walls (20, 22, 24, 26) of the cuvettes (110, 210, 310, 410, 510) have a refractive index between 1.2 and 1.7 at least in sections.

3. The microtiter plate (32, 132) according to one of the preceding claims,
wherein the cuvettes (110, 210, 310, 410, 510) further have a third and a fourth transparent bottom wall (24, 26) which
are arranged with respect to one another such that their surface normals are inclined with respect to one another at an angle between 70° and 110°, preferably between 80° and 100°, particularly preferably between 85° and 95° and in particular of at least approximately 90°,
wherein the bottom walls (20, 22, 24, 26) of the cuvettes (110, 210, 310, 410, 510) are preferably arranged such that each surface normal pair of the four mentioned surface normals encloses an angle between 70° and 110°, preferably between 80° and 100°, particularly preferably between 85° and 95° and in particular of at least approximately 90°, and/or the cuvettes (110, 210, 310, 410, 510) have an elliptical, in particular a circular cross-section.

4. The microtiter plate (32, 132) according to one of the preceding claims, wherein the cuvettes (110, 210, 310, 410, 510) have a rectangular, in particular a square cross-section, and/or
the cuvettes (110, 210, 310, 410, 510) of which have an internal volume between 0.01 ml and 0.50 ml, preferably between 0.05 ml and 0.2 ml, particularly preferably between 0.09 ml and 0.13 ml, and/or
wherein the cuvettes (110, 210, 310, 410, 510) have a maximum internal diameter between 3 mm and 9 mm, preferably between 4 mm and 8 mm, and/or
wherein the cuvettes (110, 210, 310, 410, 510) have a height between 3 mm and 30 mm, preferably between 3 mm and 20 mm, more preferably between 3 mm and 10 mm.

5. The microtiter plate (32, 132) according to one of the preceding claims, wherein the microtiter plate comprises:
- an array having a plurality of cuvettes (110, 210, 310, 410, 510), wherein the array is integrally formed, and
- a frame for receiving the array, wherein
the plurality of cuvettes (110, 210, 310, 410, 510) are arranged in an array, in particular in a (6 x 8), (8 × 12), (16 × 24) or (32 × 48) array.

6. Light sheet fluoresence microscopy (LSFM) arrangement (48, 148) for examining a sample (44), in particular for examining a plurality of samples at a high throughput, comprising:
- an illumination source (50) for generating excitation light,
- an illumination object lens (36) for receiving the excitation light and for focusing the excitation light in the form of a light plane onto a sample location (46),
- a detection object lens (38) for receiving fluorescence light emitted by a sample (44) positioned at the sample location (46),
wherein the (LSFM) arrangement is **characterized in that** the illumination object lens (36) is directed obliquely upwards and
wherein the detection object lens (38) is directed obliquely upwards and is arranged at an angle between 70° and 110°, preferably between 80° and 100°, particularly preferably between 85° and 95°, in particular of at least approximately 90°, to the illumination object lens (36), and
- wherein the LSFM arrangement further comprises positioning means (52) for relatively positioning an integral microtiter plate (32, 132) with a plurality of cuvettes (110, 210, 310, 410, 510), wherein the cuvettes (110, 210, 310, 410, 510) each comprise an opening (12) which is arranged at an upper end of the cuvette (110, 210, 310, 410, 510) and a first and a second transparent bottom wall (20, 22) which are arranged to each other such that their surface normals are inclined at an angle between 70° and 110° to each other, with respect to the illumination object lens (36) and the detection object lens (38), wherein the positioning means (52) comprise an XYZ displacement table.

7. The LSFM arrangement (148) according to claim 6, wherein the positioning means (52) are configured to displace the microtiter plate (32, 132) at least approximately perpendicularly to the light plane.

8. The LSFM arrangement (148) according to claim 6 or 7, wherein the arrangement (148) is configured to align the microtiter plate (32, 132) with the illumination object lens (36) and the detection object lens (38) by means of the positioning means (52) such that the object lenses (36, 38) are directed to a particular sample location (26) of a particular cuvette (110, 210, 310, 410, 510).

9. The LSFM arrangement (148) according to any one of claims 6 to 8, wherein the LSFM arrangement (148) is configured for examining a microtiter plate (32, 132) in which first and second bottom walls (20, 22) of cuvettes of the microtiter plate (32, 132) are arranged such that the angle (α) between the surface normal of the second bottom wall (22) of the cuvettes (110, 210, 310, 410, 510) and the longitudinal axis of the respective cuvette (110, 210, 310, 410, 510) is smaller than the angle (β) between the surface normal of the first bottom wall (20) of the cuvettes (110, 210, 310, 410, 510) and the longitudinal axis of the respective cuvette (110, 210, 310, 410, 510), and in particular is between 35° and 10°, such that the second bottom wall (22) extends flatter than the first bottom wall (20) in an examination in which the microtiter plate (32, 132) is aligned horizontally, wherein the detection object lens (38) is aligned comparatively steeply and less inclined to the vertical direction in its preferred alignment in the direction of the surface normal of the second bottom wall (22), and wherein a working distance of the detection object lens (38) is preferably smaller than a working distance of the illumination object lens (36).

10. The LSFM arrangement (148) according to any one of claims 6 to 9, in which the illumination object lens (36) and the detection object lens (38) are received in a receiving means such that they are rotatable together about a vertical axis and/or are tiltable together with respect to the vertical axis, and/or
further comprising
- a detection means (54) for detecting fluorescence light,
- a first reflection means (80) for deflecting the excitation light to the illumination object lens (36),
- a second reflection means (78) for deflecting the fluorescence light received by the detection object lens (38) to the detection means (54),
wherein the first reflection means (80) is alignable such that, when the illumination object lens (36) is tilted and/or rotated, the excitation light is deflected by the first reflection means (80) to the illumination object lens (36) such that it still enters the illumination object lens (36) at least approximately in the direction of the optical axis, and
wherein the second reflection means (78) is alignable such that, when the detection object lens (38) is tilted and/or rotated, the fluorescence light from the tilted and/or rotated detection object lens (38) is still deflected by the second reflection means (78) at least approximately to the detection means (54), and/or
wherein the illumination object lens (36) is also suitable for receiving fluorescence light from the sample location (46) and wherein the detection object lens (38) is also suitable for receiving and focusing the excitation light,
- a detection means (54) for detecting fluorescence light,
- a third reflection means (80) for deflecting the excitation light to the illumination object lens (36) or to the detection object lens (38),
- a fourth reflection means (78) for deflecting the fluorescence light received by the detection object lens (38) or by the illumination object lens (36) to the detection means (54),
wherein the third and the fourth reflection means (80, 78) are each adjustable into a first and into a second position,
in the first position the third reflection means (80) is configured for deflecting the excitation light to the illumination object lens (36) and the fourth reflection means (78) is configured for deflecting the fluorescence light received by the detection object lens (38) to the detection means (54), and
in the second position the third reflection means (80) is configured for deflecting the excitation light to the detection object lens (38) and the fourth reflection means (78) is configured for deflecting the fluorescence light received by the illumination object lens (36) to the detection means (54), wherein
the first reflection means (80) preferably corresponds to the third reflection means (80) and the second reflection means (78) preferably corresponds to the fourth reflection means (78), and the first and the second reflection means (80, 78) preferably feature said first and said second position for at least one, particularly preferably for each tilt and/or rotation position of the object lenses (36, 38).

11. System for examining a sample (44) by means of light sheet fluorescence microscopy, in particular for examining a plurality of samples at a high throughput, **characterized in that** it comprises:
- a microtiter plate (32, 132) according to one of claims 1 to 5 and/or a microtiter plate with a plurality of cuvettes each comprising a horizontal transparent bottom,
- an LSFM assembly (48, 148) according to one of claims 6 to 10.

12. The system according to claim 11, wherein the illumination object lens (36) is directed perpendicularly to a bottom wall (20, 22, 24, 26) and to the sample location (46), and wherein the detection object lens (38) is directed perpendicularly to another bottom wall (20, 22, 24, 26) and also to the sample location (46),
wherein preferably an illumination direction (40) defined by the illumination object lens (36), a detection direction (42) defined by the detection object lens (38) and the longitudinal axis (28) of at least one cuvette (110, 210, 310, 410, 510) at least approximately lie in a vertical plane.

13. Method for examining a sample (44), preferably a plurality of samples at a high throughput, with a system according to one of claims 11 or 12, wherein the method is **characterized in that** it comprises the following steps:
- focusing excitation light in the form of a light plane at a sample location (46) within one of the plurality of cuvettes (110, 210, 310, 410, 510) at least approximately perpendicularly through a bottom wall (20, 22, 24, 26),
- detecting fluorescence light emitted by a sample (44) at the sample location (46) at least approximately perpendicularly to the light plane and at least approximately perpendicularly through another bottom wall (20, 22, 24, 26).

14. Method for examining a sample (44), preferably a plurality of samples at a high throughput, with a system according to one of claims 11 or 12, wherein the method comprises the following steps:
- aligning the microtiter plate (32, 132) with the illumination object lens (36) and the detection object lens (38) of the LSFM arrangement (48, 148) by means of a positioning means (52) of the LSFM arrangement (48, 148), in particular an XYZ displacement table, such that the object lenses (36, 38) are directed to a particular sample location (26) of a particular cuvette (110, 210, 310, 410, 510), and/or
- focusing excitation light in the form of a light plane at a sample location (46) within a cuvette (110, 210, 310, 410, 510) through one of said horizontal transparent bottoms at an angle between 40° and 50°, preferably of at least approximately 45°, to the surface normal of the horizontal transparent bottom,
- detecting fluorescence light emitted by a sample (44) at the sample location (46) at least approximately perpendicularly to the light plane and at an angle between 40° and 50°, preferably of at least approximately 45°, to the surface normal of the horizontal transparent bottom.

15. The method according to claim 13 or 14, further comprising scanning a sample (44) at the sample location (46), wherein the sample is displaced at least approximately perpendicularly to the light plane, and/or
further comprising scanning a plurality of samples (44), in particular a plurality of samples.

## Revendications

1. Plaque de microtitrage (32, 132) pour le logement et le positionnement d'échantillons (44) pour un examen au moyen d'une microscopie à fluorescence, plus particulièrement d'une microscopie à fluorescence à disques lumineux inversés, dans laquelle la plaque de microtitrage est constituée d'une seule pièce, et plusieurs cuvettes (110, 210, 310, 410, 510), dans laquelle les cuvettes (110, 210, 310, 410, 510) comprennent chacune une ouverture (12), qui est disposée à une extrémité supérieure de la cuvette (110, 210, 310, 410, 510), **caractérisée en ce que** les cuvettes comprennent chacune ce qui suit :
- une première et une deuxième parois de fond (20, 22) qui sont disposées l'une par rapport à l'autre de sorte que les normales à leurs surfaces sont inclinées l'une par rapport à l'autre avec un angle entre 70° et 110°, de préférence entre 80° et 100°, plus particulièrement de préférence entre 85° et 95° et plus particulièrement d'au moins approximativement 90°,
dans laquelle l'angle (α) entre les normales des surfaces de la deuxième paroi de fond (22) des cuvettes (110, 210, 310, 410, 510) et l'axe longitudinal de la cuvette (110, 210, 310, 410, 510) correspondante est inférieur à l'angle (β) entre les normales des surfaces de la première paroi de fond (20) des cuvettes (110, 210, 310, 410, 510) et l'axe longitudinal de la cuvette (110, 210, 310, 410, 510) correspondant, plus particulièrement inférieur à 40° et se trouve de préférence entre 35° et 10°, de sorte que la deuxième paroi de fond (22) est plus plate, lors d'un examen dans lequel la plaque de microtitrage (32, 132) est orientée horizontalement, que la première paroi de fond (20) et/ou
dans laquelle l'épaisseur de paroi de la première paroi de fond (20) et de la deuxième paroi de fond (22) des cuvettes (110, 210, 310, 410, 510) se trouve entre 12,5 µm et 160 µm,
dans laquelle la plaque de microtitrage (32, 132) est réalisée d'une seule pièce à partir d'un polymère, plus particulièrement par formage thermique à partir d'un film de polymère.

2. Plaque de microtitrage (32, 132) selon la revendication 1, dans laquelle les parois de fond (20, 22, 24, 26) des cuvettes (110, 210, 310, 410, 510) sont transparentes, de sorte que la transmission dans deux plages de longueurs d'ondes, qui présentent une largeur d'au moins 20 nm et se trouvent entre 300 nm et 1200 nm, plus particulièrement entre 400 nm et 800 nm, représente au moins 50 %, de préférence au moins 70 %, plus particulièrement de préférence au moins 90 % et/ou
dans laquelle les cuvettes (110, 210, 310, 410, 510) sont constituées au moins partiellement d'un polymère, plus particulièrement de polyfluoréthylène, de polytétrafluoréthylène, de tétrafluoréthylène, d'un polymère cyclo-oléfine, de perfluoropropylène, d'un polyamide ou d'un polylimide ou au moins partiellement de verre et/ou
dans laquelle les parois de fond (20, 22, 24, 26) des cuvettes (110, 210, 310, 410, 510) présentent, au moins à certains endroits, un indice de réfraction entre 1,2 et 1,7.

3. Plaque de microtitrage (32, 132) selon l'une des revendications précédentes,
dans laquelle les cuvettes (110, 210, 310, 410, 510) comprennent en outre une troisième et une quatrième parois de fond (24, 26) qui sont disposées l'une par rapport à l'autre de sorte que les normales de leurs surfaces sont inclinées l'une par rapport à l'autre avec un angle entre 70° et 110°, de préférence entre 80° et 100°, plus particulièrement de préférence entre 85° et 95° et plus particulièrement d'au moins approximativement 90°,
dans laquelle les parois de fond (20, 22, 24, 26) des cuvettes (110, 210, 310, 410, 510) sont disposées de préférence de sorte que chaque paire de normales de surfaces des quatre normales de surfaces mentionnées forme un angle entre 70° et 110°, de préférence entre 80° et 100°, plus particulièrement de préférence entre 85° et 95° et plus particulièrement d'au moins approximativement 90° et/ou les cuvettes (110, 210, 310, 410, 510) présentent une section transversale elliptique, plus particulièrement circulaire.

4. Plaque de microtitrage (32, 132) selon l'une des revendications précédentes, dans laquelle les cuvettes (110, 210, 310, 410, 510) présentent une section transversale rectangulaire, plus particulièrement carrée et/ou
les cuvettes (110, 210, 310, 410, 510) présentent un volume interne entre 0,01 ml et 0,50 ml, de préférence entre 0,05 ml et 0,2 ml, plus particulièrement de préférence entre 0,09 ml et 0,13 ml et/ou
dans laquelle les cuvettes (110, 210, 310, 410, 510) présentent un diamètre intérieur maximal entre 3 mm et 9 mm, de préférence entre 4 mm et 8 mm et/ou
dans laquelle les cuvettes (110, 210, 310, 410, 510) présentent une hauteur entre 3 mm et 30 mm, de préférence entre 3 mm et 20 mm, plus particulièrement de préférence entre 3 mm et 10 mm.

5. Plaque de microtitrage (32, 132) selon l'une des revendications précédentes, dans laquelle la plaque de microtitrage comprend ce qui suit :
- une matrice avec plusieurs cuvettes (110, 210, 310, 410, 510), dans laquelle la matrice est réalisée d'une seule pièce et
- un cadre pour le logement de la matrice, dans laquelle
les plusieurs cuvettes (110, 210, 310, 410, 510) sont disposées dans une matrice, plus particulièrement dans une matrice (6x8), (8x12), (16×24) ou (32×48).

6. Dispositif de microscopie de fluorescence à disques lumineux (LSFM) (48, 148) pour l'examen d'un échantillon (44), plus particulièrement pour l'examen d'une pluralité d'échantillons avec un débit élevé, qui comprend ce qui suit :
- une source d'éclairage (50) pour la production d'une lumière d'excitation,
- un objectif d'éclairage (36) pour la réception de la lumière d'excitation et pour la focalisation de la lumière d'excitation sous la forme d'un plan lumineux sur un emplacement d'échantillon (46),
- un objectif de détection (38) pour la réception d'une lumière de fluorescence qui est émise par un échantillon (44) positionné sur un emplacement d'échantillon (46), dans laquelle le dispositif LSFM est **caractérisé en ce que** l'objectif d'éclairage (36) est incliné vers le haut et dans laquelle l'objectif de détection (38) est incliné vers le haut et est disposé avec un angle entre 70° et 110°, de préférence entre 80° et 100°, plus particulièrement de préférence entre 85° et 95°, plus particulièrement d'au moins approximativement 90°, par rapport à l'objectif d'éclairage (36) et dans laquelle le dispositif LSFM comprend en outre
- des moyens de positionnement (52) pour le positionnement relatif d'une plaque de microtitrage d'une seule pièce (32, 132) avec plusieurs cuvettes (110, 210,310, 410, 510), dans lequel les cuvettes (110, 210, 310, 410, 510) comprennent chacune une ouverture (12), qui est disposée au niveau d'une extrémité supérieure de la cuvette (110, 210, 310, 410, 510), et une première et une deuxième parois de fond transparentes (20, 22) qui sont disposées l'une par rapport à l'autre de sorte que les normales de leurs surfaces sont inclinées entre elles avec un angle entre 70° et 110°, par rapport à l'objectif d'éclairage (36) et à l'objectif de détection (38), dans laquelle les moyens de positionnement (52) comprennent une table de déplacement XYZ.

7. Dispositif LSFM (148) selon la revendication 6, dans lequel les moyens de positionnement (52) sont conçus pour déplacer la plaque de microtitrage (32, 132) au moins approximativement perpendiculairement au plan lumineux.

8. Dispositif LSFM (148) selon la revendication 6 ou 7, dans lequel le dispositif (148) est conçu pour orienter la plaque de microtitrage (32, 132) à l'aide des moyens de positionnement (52) par rapport à l'objectif d'éclairage (36) et à l'objectif de détection (38) de sorte que les objectifs (36, 38) sont orientés vers un emplacement d'échantillon (26) déterminé d'une cuvette (110, 210, 310, 410, 510) déterminée.

9. Dispositif LSFM (148) selon l'une des revendications 6 à 8, dans lequel le dispositif LSFM (148) est conçu pour l'examen d'une plaque de microtitrage (32, 132), dans laquelle les première et deuxième parois de fond (20, 22) des cuvettes de la plaque de microtitrage (32, 132) sont disposés de sorte que l'angle (α) entre la normale de la surface de la deuxième paroi de fond (22) des cuvettes (110, 210, 310, 410, 510) et l'axe longitudinal de la cuvette (110, 210, 310, 410, 510) correspondante est inférieur à l'angle (β) entre normale de la surface de la première paroi de fond (20) des cuvettes (110, 210, 310, 410, 510) et l'axe longitudinal de la cuvette (110, 210, 310, 410, 510) et plus particulièrement se trouve entre 35° et 10°, de sorte que la deuxième paroi de fond (22), lors d'un examen dans lequel la plaque de microtitrage (32, 132) est orientée horizontalement, est plus plate que la première paroi de fond (20), dans lequel l'objectif de détection (38), dans son orientation préférée en direction de la normale de surface de la deuxième paroi de fond (22) est orientée de manière relativement abrupte et moins inclinée par rapport à la direction verticale, et dans lequel une distance de travail de l'objectif de détection (38) est de préférence inférieure à une distance de travail de l'objectif d'éclairage (36).

10. Dispositif LSFM (148) selon l'une des revendications 6 à 9, dans lequel l'objectif d'éclairage (36) et l'objectif de détection (38) sont logés dans un moyen de logement de sorte qu'ils sont rotatifs conjointement autour d'un axe vertical et/ou qu'ils peuvent être basculés conjointement par rapport à l'axe vertical et/ou
qui comprend en outre ce qui suit
- un moyen de détection (54) pour la détection d'une lumière de fluorescence,
- un premier moyen de réflexion (80) pour la déviation de la lumière d'excitation par rapport à l'objectif d'éclairage (36),
- un deuxième moyen de réflexion (78) pour la déviation de la lumière de fluorescence reçue par l'objectif de détection (38) vers le moyen de détection (54),
dans lequel le premier moyen de réflexion (80) peut être orienté de sorte que, lors d'un basculement et/ou d'une rotation de l'objectif d'éclairage (36), la lumière d'excitation est déviée par le premier moyen de réflexion (80) vers l'objectif d'éclairage (36), de sorte qu'elle entre en outre, au moins approximativement en direction de l'axe optique, dans l'objectif d'éclairage (36) et
dans lequel le deuxième moyen de réflexion (78) peut être orienté de sorte que, lors d'un basculement et/ou d'une rotation de l'objectif de détection (38), la lumière de fluorescence provenant de l'objectif de détection basculé et/ou tourné est déviée par le deuxième moyen de réflexion (78), en outre au moins approximativement vers le moyen de détection (54) et/ou
dans lequel l'objectif d'éclairage (36) est également conçu pour la réception de la lumière de fluorescence provenant de l'emplacement d'échantillon (46) et dans lequel l'objectif de détection (38) est également conçu pour la réception et la focalisation de la lumière d'excitation, dans lequel le dispositif comprend en outre ce qui suit
- un moyen de détection (54) pour la détection d'une lumière de fluorescence,
- un troisième moyen de réflexion (80) pour la déviation de la lumière d'excitation vers l'objectif d'éclairage (36) ou vers l'objectif de détection (38),
- un quatrième moyen de réflexion (78) pour la déviation de la lumière de fluorescence reçue par l'objectif de détection (38) ou par l'objectif d'éclairage (36) vers le moyen de détection (54),
dans lequel les troisième et quatrième moyens de réflexion (80, 78) peuvent être réglés chacun dans une première et une deuxième positions,
dans la première position, le troisième moyen de réflexion (80) est réglé pour la déviation de la lumière d'excitation vers l'objectif d'éclairage (36) et le quatrième moyen de réflexion (78) est réglé pour la déviation de la lumière de fluorescence reçue par l'objectif de détection (38) vers le moyen de détection (54) et
dans la deuxième position, le troisième moyen de réflexion (80) est réglé pour la déviation de la lumière d'excitation vers l'objectif de détection (38) et le quatrième moyen de réflexion (78) est réglé pour la déviation de la lumière de fluorescence reçue par l'objectif d'éclairage (36) vers le moyen de détection (54), dans lequel
le premier moyen de réflexion (80) correspond de préférence au troisième moyen de réflexion (80) et le deuxième moyen de réflexion (78) correspond de préférence au quatrième moyen de réflexion (78) et les premier et deuxième moyen de réflexion (80, 78) présentent, de préférence pour au moins une position, de préférence pour chaque position de basculement et/ou de rotation des objectifs (36, 38), la première position et la deuxième position mentionnées.

11. Système pour l'examen d'un échantillon (44) au moyen d'une microscopie de fluorescence à disque lumineux, plus particulièrement pour l'examen d'une pluralité d'échantillons avec un débit élevé, qui est **caractérisé en ce qu'**il comprend ce qui suit :
- une plaque de microtitrage (32, 132) selon l'une des revendications 1 à 5 et/ou une plaque de microtitrage avec plusieurs cuvettes qui comprennent chacune un fond horizontal transparent,
- un dispositif LSFM (48, 148) selon l'une des revendications 6 à 10.

12. Système selon la revendication 11, dans lequel l'objectif d'éclairage (36) est orienté perpendiculairement par rapport à une paroi de fond (20, 22, 24, 26) et à l'emplacement d'échantillon (46) et dans lequel l'objectif de détection (38) est orienté perpendiculairement par rapport à une autre paroi de fond (20, 22, 24, 26) et également par rapport à l'emplacement d'échantillon (46),
dans lequel, de préférence une direction d'éclairage (40) définie par l'objectif d'éclairage (36), une direction de détection (42) définie par l'objectif de détection (38) et l'axe longitudinal (28) d'au moins une cuvette (110, 210, 310, 410, 510) se trouvent au moins approximativement dans un plan vertical.

13. Procédé d'examen d'un échantillon (44), de préférence d'une pluralité d'échantillons avec un débit élevé, avec un système selon l'une des revendications 11 ou 12, dans lequel le procédé est **caractérisé en ce qu'**il comprend les étapes suivantes :
- focalisation d'une lumière d'excitation sous la forme d'un plan lumineux vers un emplacement d'échantillon (46) à l'intérieur d'une des plusieurs cuvettes (110, 210, 310, 410, 510) au moins approximativement perpendiculairement à travers une paroi de fond (20, 22, 24, 26),
- détection d'une lumière de fluorescence qui est émise par un échantillon (44) sur l'emplacement d'échantillon (46), au moins approximativement perpendiculairement par rapport au plan lumineux et au moins approximativement perpendiculairement à travers une autre paroi de fond (20, 22, 24, 26).

14. Procédé d'examen d'un échantillon (44), de préférence d'une pluralité d'échantillons avec un débit élevé, avec un système selon l'une des revendications 11 ou 12, dans lequel le procédé est **caractérisé en ce qu'**il comprend les étapes suivantes :
- orientation de la plaque de microtitrage (32, 132) à l'aide d'un moyen de positionnement (52) du dispositif LSFM (48, 148), plus particulièrement d'une table de déplacement XYZ, par rapport à l'objectif d'éclairage (36) et à l'objectif de détection (38) du dispositif LSFM (48, 148), de sorte que les objectifs (36, 38) sont orientés vers un emplacement d'échantillon (26) déterminé d'une cuvette (110, 210, 310, 410, 510) déterminée et/ou
- focalisation d'une lumière d'excitation sous la forme d'un plan lumineux vers un emplacement d'échantillon (46) à l'intérieur d'une cuvette (110, 210, 310, 410, 510) à travers un des fonds horizontaux transparents mentionnés, avec un angle entre 40° et 50°, de préférence d'au moins approximativement 45°, par rapport à la normale de surface du fond horizontal transparent,
- détection d'une lumière de fluorescence qui est émise par un échantillon (44) sur l'emplacement d'échantillon (46) au moins approximativement perpendiculairement par rapport au plan lumineux et avec un angle entre 40° et 50°, de préférence d'au moins approximativement 45°, par rapport à la normale de surface du fond horizontal transparent.

15. Procédé selon la revendication 13 ou 14, qui comprend en outre un balayage d'un échantillon (44) à l'emplacement d'échantillon (46), dans lequel l'échantillon est déplacé au moins approximativement perpendiculairement au plan lumineux et/ou
qui comprend en outre un balayage de plusieurs échantillons (44), plus particulièrement d'une pluralité d'échantillons.
